# EUROPÄISCHE PATENTANMELDUNG

(11) **EP 4 775 501 A1**
(43) Veröffentlichungstag der Anmeldung: **15.07.2026**
(21) Anmeldenummer: 26160181.9
(22) Anmeldetag: 06.10.2020
(51) Int. Cl.: B65C 3/02, B65C 11/02, G09F 3/00, G09F 3/20, H01B 7/36, H01B 13/34, B41J 3/407, B41J 3/44, B65C 9/00

(54) **TECHNIK ZUR KENNZEICHNUNG EINES PROLATEN OBJEKTS**

(30) Priorität: 09.10.2019 BE 201905663
(62) Teilanmeldung aus: 20781567.1
(71) Anmelder: PHOENIX CONTACT GmbH & Co. KG, 32825 Blomberg (DE)
(72) Erfinder: KLAGES, Kilian, 32756 Detmold (DE); HOFMANN, Alexander, 31789 Hameln (DE); KORSMEIER, Jonas, 32657 Lemgo (DE); TRÄNKLE, Markus, 78083 Dauchingen (DE); GRETSCHER, Jürgen, 72175 Dornhan (DE); ABERLE, Benjamin, 78655 Dunningen (DE); KING, Dan, 78052 VS-Rietheim (DE)
(74) Vertreter: LifeTech IP Spies & Behrndt Patentanwälte PartG mbB

(57) **Zusammenfassung**

Eine Vorrichtung (100) zur Bereitstellung eines um ein prolates Objekt (102), vorzugsweise um einen Leiter, umlaufend geschlossen angeordneten oder anordenbaren Schlauchs als Kennzeichnung (101) des Objekts (102) ist beschrieben. Die Vorrichtung (100) umfasst einen Drucker (200) zur Ausgabe eines bedruckten Schlauchs (214) in Längsrichtung (210) oder eine Materialschnittstelle (156) zur Aufnahme eines von einem Drucker (200) in Längsrichtung (210) ausgegebenen bedruckten Schlauchs (214). Ferner umfasst die Vorrichtung (100) eine Schneideinheit (120), die dazu ausgebildet ist, den bedruckten Schlauch (214) an einer Schnittstelle des Schlauchs (214) in einer Querrichtung (121) quer, vorzugsweise senkrecht, zur Längsrichtung (210) des Schlauchs zu durchschneiden. Zumindest an der Schnittstelle sind eine obere Schlauchhälfte und eine untere Schlauchhälfte des Schlauchs, endseitig und/oder innenseitig, aneinander liegen oder miteinander verbunden. Ferner umfasst die Vorrichtung (100) eine Öffnereinheit (122) zum Öffnen der oberen und unteren Schlauchhälften. Die Öffnereinheit umfasst mindestens zwei um jeweils eine Drehachse (123A) drehbare Öffnerrollen (123). Die jeweilige Drehachse (123A) ist senkrecht oder im Wesentlichen senkrecht zur Längsrichtung (210) und zur Querrichtung (121). Die mindestens zwei Öffnerrollen (123) liegen am geschnittenen bedruckten Schlauch an in der Querrichtung (121) gegenüberliegenden Seiten an.

## Beschreibung

Die Erfindung betrifft eine Technik zur Kennzeichnung eines prolaten Objekts, beispielsweise eines Leiters. Insbesondere betrifft die Erfindung eine Vorrichtung zur Bereitstellung einer um ein prolates Objekt umlaufend geschlossen angeordneten oder anordenbaren Kennzeichnung.

Zur Kennzeichnung von beispielsweise elektrischen Leitern werden herkömmlicherweise Etikettendrucker eingesetzt, die ein Etikett bedrucken, das dann nach der Bedruckung durch manuelle Arbeiten am Leiter montiert werden muss. Das Dokument US 2003/146943 A1 beschreibt einen Drucker, der ein Etikett wechselweise bedruckt und zuschneidet.

Weiterhin sind Spezialdrucker bekannt, die für die Leiterkennzeichnung eingesetzt werden können. Das Dokument US 2004/0211522 A1 beschreibt eine Maschine, die ein vorbedrucktes Wickeletikett auf einer Spindelrolle um einen Leiter wickelt. Aus dem Dokument US 2008/0073023 A1 ist eine monolithische Maschine zum Bedrucken und Applizieren von Wickeletiketten bekannt.

Jedoch können die herkömmlichen Vorrichtungen nur bestimmte Etiketten bedrucken und, wenn eine automatisierte Applikation integriert ist, dann sind mit einer solchen Vorrichtung keine anderen Druckapplikationen möglich.

Das Dokument WO 1999/56271 A1 beschreibt das Öffnen eines bedruckten Schrumpfschlauchs, um diesen auf einen Leiter zu schieben. Jedoch besteht bei der herkömmlichen Technik zum Öffnen die Möglichkeit, dass der Schlauch beim Drücken mittels Backen auf die Längskanten des abgeflachten Schlauchs nicht öffnet, sondern eine obere und eine untere Schlauchhälfte in dieselbe Richtung ausbauchen.

Der Erfindung liegt daher die Aufgabe zu Grunde, eine Vorrichtung für ein Drucksystem vorzugsweise mit der Größe und Tragbarkeit eines Tischgeräts bereitzustellen, sodass das System in kurzer Zeit auf verschiedene Applikationen der Objektkennzeichnung, vorzugsweise verschiedene Applikationen der Leiterkennzeichnung, einschließlich der Kennzeichnung mit einem Bedrucken Schlauch umgerüstet werden kann. Eine weitere oder speziellere Aufgabe besteht darin, den bedruckten Schlauch zuverlässig zu öffnen.

Die Aufgabe wird erfindungsgemäß mit den Merkmalen des unabhängigen Anspruchs gelöst. Zweckmäßige Ausgestaltungen und vorteilhafte Weiterbildungen der Erfindung sind in den abhängigen Ansprüchen angegeben.

Ein Aspekt betrifft eine Vorrichtung zur Bereitstellung eines um ein prolates Objekt, vorzugsweise um einen Leiter, umlaufend geschlossen angeordneten oder anordenbaren Schlauchs als Kennzeichnung des Objekts. Die Vorrichtung umfasst einen Drucker, der dazu ausgebildet ist, einen bedruckten Schlauch in Längsrichtung auszugeben oder eine Materialschnittstelle, die dazu ausgebildet ist, einen von einem Drucker in Längsrichtung ausgegebenen bedruckten Schlauch aufzunehmen. Alternativ oder ergänzend umfasst die Vorrichtung eine Schneideinheit, die dazu ausgebildet ist, den bedruckten Schlauch an einer Schnittstelle des Schlauchs in einer Querrichtung quer, vorzugsweise senkrecht, zur Längsrichtung des Schlauchs zu durchschneiden, wobei zumindest an der Schnittstelle eine obere Schlauchhälfte und eine untere Schlauchhälfte des Schlauchs, endseitig und/oder innenseitig, aneinander liegen oder miteinander verbunden sind. Alternativ oder ergänzend umfasst die Vorrichtung eine Öffnereinheit zum Öffnen der oberen und unteren Schlauchhälften, die mindestens zwei um jeweils eine Drehachse drehbare Öffnerrollen umfasst, wobei die jeweilige Drehachse senkrecht oder im Wesentlichen senkrecht zur Längsrichtung und zur Querrichtung ist, und wobei die mindestens zwei Öffnerrollen am geschnittenen bedruckten Schlauch an in der Querrichtung gegenüberliegenden Seiten anliegen oder jeweils einen am geschnittenen bedruckten Schlauch an in der Querrichtung gegenüberliegenden Seiten anliegenden Riemen antreiben.

Die Öffnereinheit kann dazu ausgebildet sein, die obere Schlauchhälfte und die untere Schlauchhälfte gegenseitig zu trennen und/oder den geschnittenen bedruckten Schlauch zu öffnen, beispielsweise endseitig an der Schnittstelle oder durchgehend entlang der Längsrichtung. Beispielsweise kann mittels der Öffnerrollen die obere Schlauchhälfte von der unteren Schlauchhälfte gelöst werden.

Die Öffnerrollen können den bedruckten Schlauch, beispielsweise in einem flachgedrückten oder flachgehaltenen Zustand des Schlauchs, durch Walken des Schlauchs öffnen. Durch eine mittels der Öffnerrollen punktförmig auf die Längskante des Schlauchs oder linienförmig (beispielsweise mittels eines über die Öffnerrollen laufenden Riemens) kann der Schlauch ausgehend einem flachen Zustand geöffnet werden.

Die Öffnerrollen können paarweise an senkrecht zur Längsrichtung gegenüberliegenden Stellen am geschnittenen bedruckten Schlauch anliegen.

Die Vorrichtung kann ferner eine Objektzentriereinheit umfassen, die dazu ausgebildet ist, das prolate Objekt, vorzugsweise den Leiter, fluchtend oder koaxial zum geschnittenen bedruckten Schlauch anzuordnen.

Die Öffnerrollen können dazu ausgebildet sein, zur umlaufend geschlossenen Anordnung um das prolate Objekt den geschnittenen bedruckten Schlauch entlang der Längsrichtung über das prolate Objekt zu schieben.

Die Vorrichtung kann ferner eine Drucksignalschnittstelle umfassen, die dazu ausgebildet ist, ein Steuersignal zur Ausgabe des bedruckten Schlauchs zu erfassen. Alternativ oder ergänzend kann die Vorrichtung mindestens einen Sensor umfassen, der dazu ausgebildet ist, ein Steuersignal zur Bereitstellung der Kennzeichnung zu erfassen.

Die Vorrichtung kann ferner einen Rollenantrieb umfassen, der dazu ausgebildet ist, die Öffnerrollen um die jeweilige Drehachse synchron zu drehen (und gegebenenfalls damit die Riemen anzutreiben). Die am geschnittenen bedruckten Schlauch an in der Querrichtung gegenüberliegenden Seiten anliegenden Öffnerrollen können gegenläufig drehen.

Der Rollenantrieb kann dazu ausgebildet sein, abhängig von dem Steuersignal zur Ausgabe des bedruckten Schlauchs und/oder dem Steuersignal zur Bereitstellung der Kennzeichnung die Kennzeichnung am Objekt umlaufend geschlossen anzuordnen oder zur umlaufend geschlossen Anordnung bereitzustellen.

Die Vorrichtung kann ferner zwei in der Querrichtung längsbewegliche Schlitten umfassen, auf denen jeweils mindestens eine der mindestens zwei Öffnerrollen um die jeweilige Drehachse drehbar gelagert ist. Ein Abstand der zwei Öffnerrollen des jeweiligen Rollenpaars und/oder eine Andruckkraft der Öffnerrollen auf den geschnittenen bedruckten Schlauch kann von einer erfassten oder gemessenen Breite des Schlauchs abhängen.

Die Vorrichtung kann ferner einen zwischen der Flachhalteeinheit und der Öffnereinheit oder zwischen Rollenpaaren der Öffnereinheit angeordneten Breitensensor umfassen, der dazu ausgebildet ist, die Breite des Schlauchs (vorzugsweise vor dem Öffnen und/oder beim Öffnen) zu messen. Alternativ oder ergänzend kann die Breite des Schlauchs über die Datenschnittstelle erfasst werden.

Die umlaufend geschlossene Fläche des geschnittenen bedruckten Schlauchs als Kennzeichnung kann einfach zusammenhängend sein. Beispielsweise kann die umlaufend geschlossene Anordnung Öffnungen in der Fläche umfassen.

Die Vorrichtung kann eine Vorrichtung zum Bereitstellen eines bedruckten Schlauchs oder zum Applizieren eines bedruckten Schlauchs auf dem prolaten Objekt (kurz: Applikator) sein. Alternativ oder ergänzend kann die Vorrichtung kann eine Vorrichtung zur umlaufend geschlossen Anordnung einer gedruckten Kennzeichnung um ein prolates Objekt, vorzugsweise um einen Leiter, sein.

Eine Längsrichtung (auch: Bewegungsrichtung) des Schlauchs als Druckmedium kann der Vorschubrichtung (auch: Förderrichtung) des Druckers und/oder der Vorrichtung entsprechen.

Die Öffnerrollen können an in der Querrichtung gegenüberliegenden Längskanten am geschnittenen bedruckten Schlauch anliegen. Die Längskanten können in der Querrichtung ein geschlossener Rand des geschnittenen bedruckten Schlauchs sein. Die obere Schlauchhälfte und die untere Schlauchhälfte des Schlauchs

In einer ersten Variante, die auf jedes Merkmal und jedes Ausführungsbeispiel anwendbar ist, kann die Vorrichtung als Applikator, Vorbau oder Vorsatzgerät des Druckers, insbesondere eines Thermotransferdruckers, ausgebildet sein. Die Vorrichtung kann austauchbar sein. Eine Vielzahl verschiedener Ausführungsbeispiele der Vorrichtungen können wahlweise jeweils am selben Drucker befestigbar sein.

In einer zweiten Variante, die auf jedes Merkmal und jedes Ausführungsbeispiel anwendbar ist, kann die Vorrichtung den Drucker umfassen.

Ein Druckmedium des Druckers kann ein Schlauch sein. Eine Länge des Schlauchs als Druckmedium kann beliebig oder mehrfach länger als der bereitgestellte bedruckte Schlauch als Kennzeichnung sein. Das Druckmedium kann als Endlosschlauch bezeichnet werden. Der vom Drucker ausgegebene bedruckte Schlauch kann auch als Druckerzeugnis bezeichnet werden. Das Druckerzeugnis des Druckers kann den bedruckten Schlauch umfassen. Die (bedruckte) Kennzeichnung kann den zugeschnittenen und geöffneten, bedruckten Schlauch umfassen.

Der Drucker kann über eine Schnittstelle (z.B. eine Netzwerkschnittstelle oder eine serielle Schnittstelle) eine Kennung empfangen. Der Drucker kann dazu ausgebildet sein, die empfangene Kennung mittels eines Druckmaterials auf ein Druckmedium zu drucken. Das Druckmaterial kann ein Farbband umfassen, beispielsweise zum Thermotransferdruck. Das Druckmedien (d.h. ein Bedruckstoff oder Bedruckungsmaterial) kann eine Kunststofffolie, beispielsweise zum Heißsiegeln oder Verschweißen, oder ein Schrumpfschlauch sein. Das Druckerzeugnis kann das mittels des Druckmaterials bedruckte Druckmedium umfassen.

Das Bereitstellen kann ein Anordnen der Kennzeichnung auf dem prolaten Objekt, vorzugsweise ein umlaufend geschlossenes Anordnen um eine Längsachse des prolaten Objekts, umfassen. Der mindestens eine Aktor kann dazu ausgebildet sein, die gedruckte Kennzeichnung um eine Längsachse des Objekts umlaufend anzuordnen.

Beispielsweise kann der Öffnereinheit die Kennzeichnung anordnen oder bereitstellen, wenn das Steuersignal der Drucksignalschnittstelle die Ausgabe des Druckerzeugnisses an der Materialschnittstelle angibt und das Steuersignal des Sensors die Präsenz des Objekts oder einen Nutzwunsch zur Bereitstellung der Kennzeichnung angibt.

Die Vorrichtung und der Drucker können nebeneinander, beispielsweise ohne direkte mechanische Verbindung, angeordnet sein. Beispielsweise können Drucker und Vorrichtung jeweils standfest und/oder rutschfest auf derselben Arbeitsfläche angeordnet sein. Beispielsweise kann eine Materialschnittstelle des Druckers mit der Materialstelle der Vorrichtung fluchten oder in Deckung stehen. Zwischen dem Drucker und der Vorrichtung kann im Betrieb ein freier Spalt sein.

Die Schneideinheit kann eine bewegliche (vorzugsweise längsbewegliche) Klinge umfassen, die beispielsweise vertikal steht und gesteuert zum Schneiden hoch fährt. Die bewegliche Klinge kann über eine stationäre Gegenklinge (kurz: stationäre Klinge) gleiten. Zwischen den Klingen kann eine Durchgangsöffnung der Materialschnittstelle sein, d.h. zwischen denen kann der bedruckte Schlauch an die Vorrichtung übergeben werden.

Ein Antrieb der Klinge kann unterhalb der Materialschnittstelle angeordnet sein und/oder einen Elektromotor, ein Getriebe und eine auf der beweglichen Klinge befestigte Zahnstange als Linearantrieb umfassen.

Eine Schnittkante der beweglichen Klinge kann schräg zur Bewegungsrichtung oder V-förmig sein. Eine Schnittkante der stationären Klinge kann senkrecht zur Bewegungsrichtung oder V-förmig sein. Die bewegliche Klinge mit schräger Schnittkante kann einen Führungszapfen umfassen, der in einer Offenstellung der beweglichen Klinge an der stationären Klinge anliegt.

Die Vorrichtung kann ferner eine Flachhalteeinheit umfassen, die dazu ausgebildet ist, ein Ausbauchen des Schlauchs senkrecht zur Längsrichtung und/oder senkrecht zur Querrichtung zu verhindern. Beispielsweise umfasst die Flachhalteeinheit zwei Niederhaltekanten, zwischen den der Schlauch wahlweise oder gesteuert flachgehalten oder geführt werden kann.

Die Flachhalteeinheit und die Schneideinheit können von einem gemeinsamen Antrieb angetrieben sein.

Die Flachhalteeinheit kann dazu ausgebildet sein, ein Ausbauchen der oberen Schlauchhälfte nach unten und/oder der unteren Schlauchhälfte nach oben zu verhindern.

Die Flachhalteeinheit oder eine zusätzliche Einheit der Vorrichtung kann zwischen der Flachhalteeinheit und der Öffnereinheit ein Heizelement umfassen. Das Heizelement kann dazu ausgebildet sein, den Schlauch einseitig, vorzugsweise entweder die obere Schlauchhälfte oder die untere Schlauchhälfte, zur lokalen Verformung des Schlauchs, vorzugsweise zur lokalen Kontraktion des Schlauchs (beispielsweise eines Schrumpfschlauchs), zu erwärmen.

Alternativ oder ergänzend können die Heizelemente in der Querrichtung auf beiden Seiten des Schlauchs angeordnet sein. Beispielsweise umfasst die Öffnereinheit oder eine zusätzliche Einheit zwischen der Flachhalteeinheit und der Öffnereinheit zwei Heizelemente, die auf den Schlauch drücken und/oder Wärme leiten an in der Querrichtung gegenüberliegenden Seiten des Schlauchs.

Der bedruckte Schlauch kann geführt sein durch die Flachhalteeinheit, nämlich zwischen zwei horizontalen Flächen, einer horizontalen Fläche und einer Walze mit horizontaler Lauffläche oder zwei Walzen mit horizontalen Laufflächen. Ein Abstand in Längsrichtung des Schlauchs zwischen (beispielsweise der horizontalen Führung) der Flachhalteeinheit und einer ersten Öffnerrolle der Öffnungseinheit (beispielsweise zur Ausübung eines Kantendrucks) kann kleiner sein als eine Breite oder ein Durchmesser des Schlauchs.

Die Öffnereinheit kann an gegenüberliegenden Kanten (d.h. Längskanten) des flachen (d.h. noch geschlossenen) Schlauchs direkt anliegen oder mindestens zwei an gegenüberliegenden Kanten am Schlauch anliegende Riemen antreiben. Die Öffnerrollen können (direkt oder über den Riemen) einer horizontalen Druckkraft auf die jeweilige Kante des Schlauchs ausüben. Die Öffnerrollen können in Richtung des Schlauchs vorgespannt sein. Öffnerrollen können eine vertikale Drehachse aufweisen.

Die Öffnerrollen oder die Riemen können tailliert. Die Öffnerrollen (und gegebenenfalls damit die Riemen) können in Bewegungsrichtung des Schlauchs angetrieben sein.

Vorzugsweise sind auf jeder Seite des Schlauchs eine Vielzahl von Öffnerrollen paarweise gegenüberliegend angeordnet. Die Vielzahl von Öffnerrollen kann synchron angetrieben sein.

Die Öffnerrollen Rollen (und gegebenenfalls damit die Riemen) können auf quer zur Längsrichtung des Schlauchs beweglichen Schlitten gelagert sein. Ein Abstand zwischen den Rollen oder Riemen kann mittels der beweglichen Schlitten gesteuert sein, beispielsweise in Abhängigkeit von der Breite oder dem Durchmesser des Schlauchs. Der Breitensensor kann berührungslos, vorzugsweise optisch, die Breite oder den Durchmesser des Schlauchs erfassen.

Die Vorrichtung kann ferner eine Unterdrucköffnereinheit umfassen, die mindestens einen Saugnapf, vorzugsweise mindestens zwei Saugnäpfe, umfasst. Der oder die Saugnäpfe können jeweils auf der oberen Schlauchhälfte und/oder der unteren Schlauchhälfte des Schlauchs in Anlage bringbar sein. Die Unterdrucköffnereinheit vermag mittels eines Unterdrucks im jeweiligen Saugnapf die obere Schlauchhälfte und die unteren Schlauchhälfte zumindest teilweise voneinander zu lösen beim Öffnen des Schlauchs.

Das Öffnen des Schlauchs kann den Schlauch zerstörungsfrei öffnen. Die obere Schlauchhälfte und die unteren Schlauchhälfte können an der Längskante des Schlauchs verbunden sein und verbunden bleiben.

Die Unterdrucköffnereinheit kann Teil der Öffnereinheit sein, Teil der Flachhalteeinheit sein, oder zwischen der Flachhalteeinheit und der Öffnereinheit angeordnet sein.

Der Unterdruck (beispielsweise ein Luft-Unterdruck) in den Saugnäpfen kann quer zur Druckkraft der Öffnerrollen und/oder quer zur Bewegungsrichtung oder Längsrichtung (vorzugsweise in entgegengesetzten Richtungen auf die obere und untere Schlauchhälfte) ausgeübt werden. Optional ist ein Luft-Überdruck, vorzugsweise mittels einer Düse, parallel zur Bewegungsrichtung oder Längsrichtung endseitig auf den Schlauch ausgeübt.

Die Vorrichtung kann ferner eine mechanische Schnittstelle umfassen, die dazu ausgebildet ist, die Vorrichtung am Drucker lösbar oder irreversibel zu befestigen. Die Befestigung kann irreversibel sein, beispielsweise eine stoffschlüssige Verbindung umfassen. Alternativ kann die Vorrichtung am Drucker abnehmbar befestigt sein, beispielsweise zerstörungsfrei lösbar sein und/oder werkzeuglos befestigbar und/oder lösbar sein.

Der mindestens eine Sensor des Steuersignals zur Bereitstellung der Kennzeichnung kann dazu ausgebildet sein, das Objekt zu erfassen, vorzugsweise eine Präsenz, eine Lage und/oder eine Größe des Objekts zu erfassen.

Das Steuersignal zur Bereitstellung der Kennzeichnung kann die Präsenz (d.h. die Anwesenheit), die Lage und/oder die Größe des Objekts angeben. Die Lage kann eine Position und/oder Ausrichtung des Objekts (beispielsweise einer Längsachse des Objekts) umfassen. Die Größe kann eine Länge (beispielsweise entlang der Längsachse), einen Durchmesser und/oder einen Umfang des Objekts umfassen.

Der mindestens eine Sensor des Steuersignals zur Bereitstellung der Kennzeichnung kann das Objekt berührungslos erfassen.

Der mindestens eine Sensor des Steuersignals zur Bereitstellung der Kennzeichnung kann einen Taster umfassen. Das Steuersignal zur Bereitstellung der Kennzeichnung kann eine Betätigung des Tasters angeben.

Das Steuersignal zur Bereitstellung der Kennzeichnung kann einen Nutzerwunsch zur Bereitstellung der Kennzeichnung angeben. Das Steuersignal zur Bereitstellung der Kennzeichnung kann ein Auslösesignal sein.

Die Vorrichtung umfasst mindestens einen Aktor, wobei die Schneideinheit, die Öffnereinheit, eine Flachhalteeinheit, ein Heizelement und/oder eine Unterdrucköffnereinheit jeweils ein Beispiel für einen Aktor der Vorrichtung sind.

Der mindestens eine Aktor kann dazu ausgebildet sein, in Reaktion auf das Erfassen des Objekts und/oder das Erfassen des Auslösesignals die Kennzeichnung am Objekt umlaufend geschlossen anzuordnen oder zur umlaufend geschlossen Anordnung bereitzustellen.

Der Taster kann ein Fußschalter oder ein Handschalter sein.

Die Drucksignalschnittstelle kann einen Sensor umfassen, der dazu ausgebildet ist, das vom Drucker ausgegebene Druckerzeugnis zu erfassen, vorzugsweise eine Präsenz, eine Position und/oder einen Vorschub des ausgegebenen Druckerzeugnisses zu erfassen.

Der Sensor zur Erfassung der Ausgabe des Druckerzeugnisses (auch: Sensor zur Erfassung des ausgegebenen Druckerzeugnisses oder kurz: Sensor zur Erfassung des Druckerzeugnisses) kann an der Materialschnittstelle angeordnet sein. Der Sensor zur Erfassung des Druckerzeugnisses kann das Druckerzeugnis berührungslos erfassen.

Der mindestens eine Sensor kann ferner einen Sensor zur Erfassung des vom Drucker ausgegebenen Druckerzeugnisses umfassen. Das Erfassen des Druckerzeugnisses kann ein Erfassen der Präsenz, einer Lage (z.B. Position und/oder Ausrichtung) und/oder einer Größe (z.B. Länge und/oder Durchmesser) des Druckerzeugnisses umfassen.

Die Drucksignalschnittstelle kann eine Datenschnittstelle umfassen, die dazu ausgebildet ist, mit dem Drucker zur Bereitstellung oder Anordnung der Kennzeichnung zu kommunizieren, vorzugsweise bidirektional zu kommunizieren.

Der mindestens eine Aktor kann dazu ausgebildet sein, (beispielsweise in Reaktion auf die Erfassung des Objekts und/oder des Auslösesignals) in Kommunikation mit dem Drucker das vom Drucker ausgegebene Druckerzeugnis zur Kennzeichnung zu bearbeiten und die Kennzeichnung am Objekt anzuordnen oder zur Anordnung bereitzustellen.

Die bidirektionale Kommunikation kann das Empfangen des Steuersignals zur Ausgabe des Druckerzeugnisses vom Drucker und ein Senden eines Steuersignals zur Anforderung der Ausgabe des Druckerzeugnisses an den Drucker umfassen. Beispielsweise kann das Steuersignal zur Bereitstellung der Kennzeichnung als Anforderung der Ausgabe des Druckerzeugnisses über die Datenschnittstelle an den Drucker weitergeleitet werden.

Der Drucker kann dazu ausgebildet sein, das Druckerzeugnis an der Materialschnittstelle an die Vorrichtung zu übergeben, beispielsweise gemäß der bidirektionalen Kommunikation und/oder in Reaktion auf das Steuersignal zur Bereitstellung der Kennzeichnung.

Alternativ oder ergänzend kann die Datenschnittstelle zur drahtlosen Kommunikation ausgebildet sein, vorzugsweise mittels Radiosignalen, Infrarotsignalen oder Nahfeldkommunikation.

Die Datenschnittstelle kann dazu ausgebildet sein, einen abwechselnden und/oder ereignisgetriebenen Betrieb des mindestens einen Aktors und des Druckers zum Bereitstellen oder Anordnen der Kennzeichnung zu synchronisieren oder zu koordinieren.

Beispielsweise kann ein vom Drucker ausgeführter Vorschub des Druckerzeugnisses mit einem Schneiden, Falzen und/oder Umschlagen des ausgegebenen Druckerzeugnisses abwechseln ausgeführt, synchronisiert und/oder koordiniert sein. Die jeweils beim abwechselnden und/oder ereignisgetriebenen Betrieb von der Vorrichtung oder dem Drucker ausgeführten Teilschritte zum Bereitstellen oder Anordnen der Kennzeichnung können auch als Aktionen bezeichnet werden. Die Koordination der Teilschritte kann auch als Aktionskoordinierung bezeichnet werden.

Die Datenschnittstelle kann dazu ausgebildet sein, dem Drucker ein Ansteuern des mindestens einen Aktors der Vorrichtung, ein Auslesen der Steuersignale des mindestens einen Sensors und/oder der Drucksignalschnittstelle der Vorrichtung und/oder einer in der Vorrichtung gespeicherten Kennung zu ermöglichen.

Der mindestens eine Aktor der Vorrichtung kann mittels der Datenschnittstelle druckerseitig ansteuerbar sein. Alternativ oder ergänzend können Messwerte des mindestens einen Sensors der Vorrichtung mittels der Datenschnittstelle abfragbar sein.

Die Datenschnittstelle kann innerhalb der Vorrichtung mit dem mindestens einen Aktor und/oder dem mindestens einen Sensor elektrisch verbunden sein.

Die Datenschnittstelle kann dazu ausgebildet sein, Steuerbefehle zur Steuerung oder Regelung des mindestens einen Aktors vom Drucker zu empfangen und/oder aufgrund der Steuersignale des mindestens einen Sensors und/oder der Drucksignalschnittstelle Steuerbefehle zur Steuerung oder Regelung des Druckers an den Drucker zu senden.

Die Datenschnittstelle kann innerhalb der Vorrichtung über eine Steuereinheit und/oder eine Regeleinheit mit dem mindestens einen Aktor und/oder dem mindestens einen Sensor elektrisch verbunden sein. Die Steuereinheit und/oder Regeleinheit kann aus den erfassen Messwerte Parameter des Applizierens bestimmen. Die an den Drucker gesendeten Steuerbefehle können die Parameter umfassen und/oder den Drucker gemäß den Parametern steuern.

Die Datenschnittstelle kann dazu ausgebildet sein, Steuersignale des mindestens einen Sensors und/oder der Drucksignalschnittstelle und/oder aus den Steuersignalen bestimmte Parameter zum Bereitstellen oder Anordnen der Kennzeichnung an den Drucker zu senden.

Die Vorrichtung kann ferner eine Steuereinheit oder Regeleinheit umfassen, die dazu ausgebildet ist, den mindestens einen Aktor der Vorrichtung abhängig von den Steuersignalen des mindestens einen Sensors, über die Datenschnittstelle empfangenen Messwerten des Druckers, über die Datenschnittstelle empfangenen Bestätigungsmeldungen des Druckers und/oder über die Datenschnittstelle empfangene Steuerbefehle des Druckers zum Anordnen oder Bereitstellen der Kennzeichnung zu steuern oder zu regeln.

Die Steuereinheit oder Regeleinheit kann ferner dazu ausgebildet sein, über die Datenschnittstelle einen Steuerbefehl vom Drucker zu erhalten, die Steuerung oder Regelung des mindestens einen Aktors gemäß dem Steuerbefehl auszuführen, und über die Datenschnittstelle eine Rückmeldung in Reaktion auf den Abschluss der Ausführung des Steuerbefehls an den Drucker zu senden.

Die Rückmeldung kann eine Bestätigung des (beispielsweise erfolgreichen) Abschlusses der Ausführung des Steuerbefehls oder eine Fehlermeldung zu einem Fehler bei der Ausführung des Steuerbefehls umfassen. Beispielsweise kann die Rückmeldung den Drucker über das Erreichen eines definierten Zustandes der Vorrichtung, z.B. eine Endlage des mindestens einen Aktors, informieren.

Die Steuereinheit oder Regeleinheit kann ferner dazu ausgebildet sein, aufgrund des mittels des mindestens einen Sensors erfassten Steuersignals einen Parameter des Anordnens zu bestimmen und den bestimmten Parameter über die Datenschnittstelle an den Drucker zu senden. Das erfasste Steuersignal kann eine Länge, einen Durchmesser oder einen Umfang des Objekts angeben. Der bestimmte Parameter kann eine Länge eines Vorschubs oder eines Rückzugs des Druckerzeugnisses angeben.

Ein von der Vorrichtung an den Drucker über die Datenschnittstelle gesendeter Steuerbefehl kann einen Vorschub oder einen Rückzug initiieren.

Die Steuereinheit oder Regeleinheit kann während der Zeitspanne zwischen dem Erhalt des Steuerbefehls vom Drucker und dem Senden der Rückmeldung an den Drucker das Bereitstellen oder Anordnen der Kennzeichnung oder einen Teilschritt des Bereitstellens oder Anordnens der Kennzeichnung gemäß dem Steuerbefehl autonom ausführen.

Die Vorrichtung kann ferner eine elektrische Schnittstelle umfassen, die dazu ausgebildet ist, die Vorrichtung über den Drucker mit elektrischer Energie zu speisen.

Die Datenschnittstelle und/oder die elektrische Schnittstelle können relativ zur mechanischen Schnittstelle dazu angeordnet ist, den Drucker zur Kommunikation bzw. Speisung elektrischer Energie zu kontaktieren, wenn die Vorrichtung mittels der mechanischen Schnittstelle am Drucker befestigt ist.

Die Datenschnittstelle kann relativ zur mechanischen Schnittstelle dazu angeordnet sein, den Drucker zur Kommunikation zu kontaktieren, wenn die Vorrichtung mittels der mechanischen Schnittstelle am Drucker befestigt ist. Die elektrische Schnittstelle kann relativ zur mechanischen Schnittstelle dazu angeordnet sein, den Drucker zur Energiespeisung zu kontaktieren, wenn die Vorrichtung mittels der mechanischen Schnittstelle am Drucker befestigt ist. Beispielsweise kann das Befestigen der Vorrichtung mittels der mechanischen Schnittstelle am Drucker dazu führen, dass Kontakte der Datenschnittstelle und/oder der elektrischen Schnittstelle geschlossen werden.

Das Objekt kann einen Leiter, vorzugsweise einen Stromleiter oder einen Lichtleiter, umfassen.

Die mechanische Schnittstelle kann einen Zentrierstift oder eine Öffnung zur Aufnahme eines Zentrierstifts und/oder einen Hebel und einen mit dem Hebel drehfest verbundenen Exzenter umfasst, der zur schraublosen und/oder werkzeuglosen Befestigung der Vorrichtung am Drucker ausgebildet ist.

Ein weiter Aspekt betrifft ein System (auch: Drucksystem) zur Bereitstellung eines um ein prolates Objekt, vorzugsweise um einen Leiter, umlaufend geschlossen angeordneten oder anordenbaren Schlauchs als Kennzeichnung des Objekts. Das System umfasst einen Drucker, vorzugsweise einen Thermotransferdrucker, der dazu ausgebildet ist, ein einen bedruckten Schlauch als Druckerzeugnis auszugeben. Alternativ oder ergänzend umfasst das System eine Vorrichtung gemäß einer Ausführungsform des Vorrichtungsaspekts. Die Materialschnittstelle der Vorrichtung kann relativ zum Drucker des Systems, dazu angeordnet sein, den vom Drucker ausgegebenen bedruckten Schlauch als Druckerzeugnis aufzunehmen.

Ein weiterer Aspekt betrifft ein Verfahren zur Bereitstellung eines um ein prolates Objekt, vorzugsweise um einen Leiter, umlaufend geschlossen angeordneten oder anordenbaren Schlauchs als Kennzeichnung des Objekts. Das Verfahren umfasst einen Schritt des Bedruckens eines Schlauchs in Längsrichtung oder des Aufnehmens eines an einer Materialschnittstelle von einem Drucker in Längsrichtung ausgegebenen bedruckten Schlauchs. Alternativ oder ergänzend umfasst das Verfahren einen Schritt des Durchschneidens des bedruckten Schlauchs an einer Schnittstelle des Schlauchs in einer Querrichtung quer, vorzugsweise senkrecht, zur Längsrichtung des Schlauchs mittels einer Schneideinheit. Zumindest an der Schnittstelle können eine obere Schlauchhälfte und eine untere Schlauchhälfte des Schlauchs, endseitig und/oder innenseitig, aneinander liegen oder miteinander verbunden sein. Alternativ oder ergänzend umfasst das Verfahren einen Schritt des Öffnens der oberen und unteren Schlauchhälften mittels einer Öffnereinheit. Mindestens zwei um jeweils eine Drehachse drehbare Öffnerrollen können den Schlauch walken, wobei die jeweilige Drehachse senkrecht oder im Wesentlichen senkrecht zur Längsrichtung und zur Querrichtung ist, und wobei die mindestens zwei Öffnerrollen am geschnittenen bedruckten Schlauch an in der Querrichtung gegenüberliegenden Seiten anliegen oder jeweils einen am geschnittenen bedruckten Schlauch an in der Querrichtung gegenüberliegenden Seiten anliegenden Riemen antreiben.

Das Verfahren kann ferner jedes Merkmal oder einen entsprechenden Verfahrensschritt umfassen, das bzw. der im Kontext der Vorrichtung, des Druckers und/oder des Drucksystems offenbart ist. Beispielsweise kann das Verfahren mindestens einen der in der Beschreibung mit B1 bis B17 und S1 bis S24 bezeichneten Schritte umfassen.

Ausführungsbeispiel der Vorrichtung ermöglichen ein modulares System (auch: Drucksystem), das auf einem einzigen Drucker, beispielsweise einem Tischgerät, basieren kann, sodass dieser Drucker in kurzer Zeit oder wenigen Schritten auf die verschiedenen Applikationen der Objektkennzeichnung, vorzugsweise der Leiterkennzeichnung, umgerüstet werden kann.

Beispielsweise kann ein Nutzer schnell und einfach aus einem normalen oder applikationsunspezifischen Etikettendrucker ein System bilden zur Unterstützung beim Applizieren einer Kennzeichnung (beispielsweise einer Beschriftung) auf das zu kennzeichnende prolate Objekt, vorzugsweise den zu kennzeichnenden Leiter.

Die Begriffe Applikation und Applizieren können (vorzugsweise als Verfahrensschritt) hierin synonym oder austauschbar ausgelegt werden. Die Begriffe Anordnung und Anordnen können (vorzugsweise als Verfahrensschritt) hierin synonym oder austauschbar ausgelegt werden.

Das Applizieren der Kennzeichnung auf dem oder am prolaten Objekt (vorzugsweise auf dem oder am Leiter) kann ein Anordnen der Kennzeichnung auf dem oder am prolaten Objekt umfassen. Das Bereitstellen der um das prolate Objekt (vorzugsweise um den Leiter) umlaufend geschlossen angeordneten oder anordenbaren Kennzeichnung kann ein Schneiden (vorzugsweise Zuschneiden) des Druckerzeugnisses umfassen.

Das prolate Objekt kann ein längliches Objekt sein. Zumindest abschnittsweise kann das prolate Objekt ein (beispielsweise allgemeiner) Zylinder sein, vorzugsweise ein Kreiszylinder oder ein Prisma.

Das prolate Objekt kann eine Längsachse aufweisen. Eine Ausdehnung des Objekts in der Richtung der Längsachse kann größer (beispielsweise mehrfach größer) sein als eine oder jede Ausdehnung des Objekts quer oder senkrecht zur Längsachse.

Das prolate Objekt kann ein Leiter, ein Rohr, ein Gefäß oder ein Gehäuse sein. Der Leiter kann ein längliches Objekt zur Leitung von Signalen oder Stoffen sein. Der Leiter kann beispielsweise ein längliches Objekt zur Leitung von elektrischem Strom und/oder elektromagnetischer Strahlung (vorzugsweise Licht) sein. Das Gefäß kann ein Reagenzglas oder ein Probenglas, beispielsweise zur Aufnahme und/oder zum Transport eines Fluids, sein.

Der Leiter kann eine Ader oder zwei, mindestens zwei, drei oder mehr voneinander elektrisch isolierte oder optisch entkoppelte Adern umfassen. Die Adern können zueinander parallel verlaufen oder miteinander (beispielsweise paarweise) verdrillt sein.

Der Leiter kann ein ein-, mehr-, fein- und/oder feinstdrähtige Leiter sein.

Der Leiter kann ein Kabel, Kabelbündel und/oder Flachbandkabel sein. Der Leiter kann ein Lichtleiter (auch: Lichtleitkabel) sein. Der Leiter kann ein Schlauch und/oder eine Fluidleitung sein.

Der Leiter kann ein zylindrischer Körper und/oder ein nichtrotationssymmetrischer, länglicher Körper sein. Die Leitung der Signale oder Stoffe kann entlang einer Längsachse des Leiters gerichtet sein und/oder zwischen Enden des Leiters verlaufen.

Indem Ausführungsbeispiele der Vorrichtung für eine spezifische Applikation an einem für die Applikation unspezifischen Drucker befestigbar sind, können Spezialdrucker für die jeweilige Applikation, und damit Kosten, vermieden und/oder Ressourcen effektiver genutzt werden. Beispielsweise kann ein Nutzungsgrad des Druckers dadurch vergrößert werden. Dieselben oder weitere Ausführungsbeispiele der Vorrichtung können einen nachgelagerten manuellen Aufwand bei der Montage der Bedruckungsmaterialien an den zu kennzeichnenden Objekten verringern.

Nachfolgend wird die Erfindung unter Bezugnahme auf die anliegenden Zeichnungen anhand bevorzugter Ausführungsformen näher erläutert.

Es zeigen:
- Fig. 1: eine schematische Schnittansicht eines ersten Ausführungsbeispiels einer Vorrichtung zur Bereitstellung eines Schlauchs als Kennzeichnung, die an einem Ausführungsbeispiel eines Druckers befestigt ist;
- Fig. 2: eine schematische Schnittansicht eines zweiten Ausführungsbeispiels der Vorrichtung zur Bereitstellung eines Schlauchs als Kennzeichnung in einem ersten Zustand;
- Fig. 3: eine schematische Schnittansicht des zweiten Ausführungsbeispiels der Vorrichtung zur Bereitstellung eines Schlauchs als Kennzeichnung in einem zweiten Zustand;
- Fig. 4: eine schematische Draufsicht eines dritten Ausführungsbeispiels der Vorrichtung zur Bereitstellung eines Schlauchs als Kennzeichnung;
- Fig. 5A: eine schematische perspektivische Ansicht einer beispielhaften Öffnereinheit, die in Ausführungsbeispielen der Vorrichtung einsetzbar ist;
- Fig. 5B: eine schematische Ansicht einer ersten beispielhaften Objektzentriereinheit, die in Ausführungsbeispielen der Vorrichtung einsetzbar ist;
- Fig. 5C: eine schematische Ansicht einer zweiten beispielhaften Objektzentriereinheit, die in Ausführungsbeispielen der Vorrichtung einsetzbar ist;
- Fig. 6A: eine schematische perspektivische Ansicht einer beispielhaften Schneideinheit der Vorrichtung zur Bereitstellung eines Schlauchs als Kennzeichnung;
- Fig. 6B: eine schematische perspektivische Ansicht einer Variante der Schneideinheit der Fig. 6A;
- Fig. 6C: eine schematische Ansicht einer ersten beispielhaften Kombination von Klingen für die Schneideinheit der Vorrichtung zur Bereitstellung eines Schlauchs als Kennzeichnung;
- Fig. 6D: eine schematische Ansicht einer zweiten beispielhaften Kombination von Klingen für die Schneideinheit der Vorrichtung zur Bereitstellung eines Schlauchs als Kennzeichnung;
- Fig. 6E: eine schematische Ansicht einer dritten beispielhaften Kombination von Klingen für die Schneideinheit der Vorrichtung zur Bereitstellung eines Schlauchs als Kennzeichnung;
- Fig. 7A: eine schematische perspektivische Ansicht einer beispielhaften Flachhalteeinheit der Vorrichtung zur Bereitstellung eines Schlauchs als Kennzeichnung, vorzugsweise mit einem senkrecht zur Querrichtung auf den Schlauch einwirkenden Heizelementen;
- Fig. 7B: eine schematische Draufsicht einer beispielhaften Öffnereinheit der Vorrichtung zur Bereitstellung eines Schlauchs als Kennzeichnung, vorzugsweise mit zwei in der Querrichtung gegenüberliegend auf den Schlauch einwirkenden Heizelementen;
- Fig. 8A: eine schematische Draufsicht einer beispielhaften Rollenpaaranordnung des Druckers und/oder der Vorrichtung zur Bereitstellung eines Schlauchs als Kennzeichnung;
- Fig. 8B: eine schematische perspektivische Ansicht der beispielhaften Rollenpaaranordnung der Fig. 8A;
- Fig. 9: eine schematische Schnittansicht eines Ausführungsbeispiels des Druckers als Thermotransferdrucker;
- Fig. 10A: eine schematische perspektivische Ansicht eines beispielhaften Drucksystems, das ein Ausführungsbeispiel des Druckers und ein Ausführungsbeispiel der Vorrichtung zur Bereitstellung eines Schlauchs als Kennzeichnung umfasst, in einer montierten Stellung;
- Fig. 10B: eine schematische perspektivische Ansicht des beispielhaften Drucksystems der Fig. 10A in einer demontierten Stellung;
- Fig. 11A: ein erstes Flussdiagramm eines Ausführungsbeispiels eines Verfahrens zum Bereitstellung eines Schlauchs als Kennzeichnung; und
- Fig. 11B: ein erstes Flussdiagramm eines Ausführungsbeispiels eines Verfahrens zum Bereitstellung eines Schlauchs als Kennzeichnung;

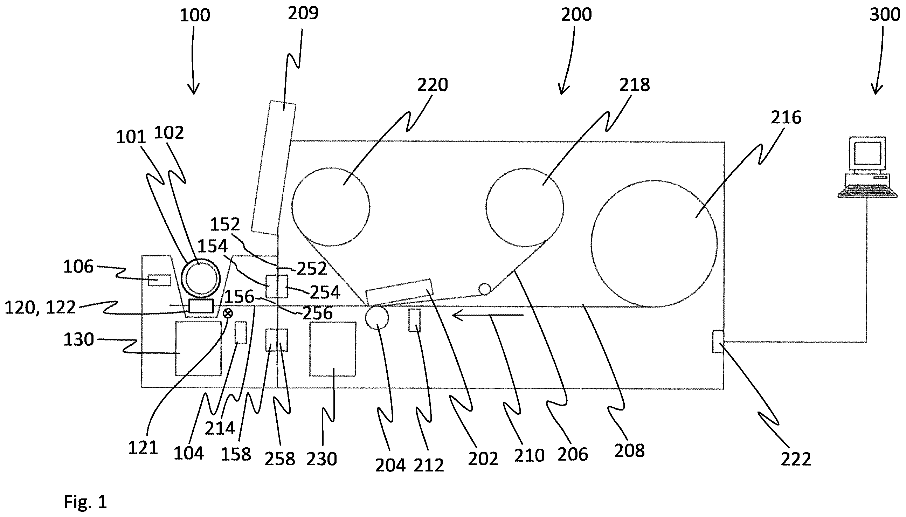

Fig. 1 zeigt ein Ausführungsbeispiel einer allgemein mit Bezugszeichen 100 bezeichneten Vorrichtung zur Bereitstellung eines um ein prolates Objekt 102, vorzugsweise um einen Leiter, umlaufend geschlossen angeordneten oder anordenbaren Schlauchs als Kennzeichnung 101 des Objekts 102.

Die Vorrichtung 100 umfasst einen Drucker 200, der dazu ausgebildet ist, einen bedruckten Schlauch 214 in Längsrichtung 210 auszugeben oder eine Materialschnittstelle 156, die dazu ausgebildet ist, einen von einem Drucker 200 in Längsrichtung 210 ausgegebenen bedruckten Schlauch 214 aufzunehmen.

Ferner umfasst die Vorrichtung 100 eine Schneideinheit 120, die dazu ausgebildet ist, den bedruckten Schlauch 214 an einer Schnittstelle des Schlauchs in einer Querrichtung 121 quer, vorzugsweise senkrecht, zur Längsrichtung 210 des Schlauchs zu durchschneiden, wobei zumindest an der Schnittstelle eine obere Schlauchhälfte und eine untere Schlauchhälfte des Schlauchs, endseitig und/oder innenseitig, aneinander liegen oder miteinander verbunden sind.

Ferner umfasst die Vorrichtung 100 eine Öffnereinheit 122 zum Öffnen der oberen und unteren Schlauchhälften. Die Öffnereinheit 122 umfasst mindestens zwei um jeweils eine Drehachse drehbare Öffnerrollen. Die jeweilige Drehachse ist senkrecht oder im Wesentlichen senkrecht zur Längsrichtung 210 und zur Querrichtung 121. Die mindestens zwei Öffnerrollen liegen am geschnittenen bedruckten Schlauch an, vorzugsweise an in der Querrichtung 121 gegenüberliegenden Seiten.

Ausführungsbeispiele können ermöglichen, dass der Schlauch geschnitten und geöffnet bereitgestellt wird. Die Schneideinheit 120 kann auch als eine Ablängvorrichtung bezeichnet werden. Beispielsweise kann aufgrund der Kombination von Schneideinheit 120 und Öffnungseinheit 122 die Schlauchlänge durch den Nutzer der Vorrichtung einstellbar sein.

Optional umfasst das Ausführungsbeispiel eine mechanische Schnittstelle 152, die dazu ausgebildet ist, die Vorrichtung 100 an einem Drucker 200 abnehmbar zu befestigen. Alternativ oder ergänzend umfasst die Vorrichtung 100 eine Datenschnittstelle 158, die dazu ausgebildet ist, mit dem Drucker 200 zur Bereitstellung (beispielsweise zur Applikation) des bedruckten, geschnittenen und geöffneten Schlauchs 101 als Kennzeichnung zu kommunizieren.

Für eine prägnante Beschreibung, und ohne Beschränkung des prolaten Objekts 102, wird im Folgenden ein Leiter als Beispiel des prolaten Objekts 102 beschrieben.

Ferner sind im Folgenden Ausführungsbeispiel der Variante einer am Drucker 200 lösbar befestigten oder befestigbaren Vorrichtung 100 beschrieben oder gezeigt. Die im Kontext dieser Variante offenbarten Merkmale sind auch für eine weitere Variante jedes Ausführungsbeispiels offenbart, bei welcher die Vorrichtung 100 und der Drucker 200 ein (beispielsweise nicht zerstörungsfrei trennbares) Drucksystem bilden (auch: monolithisches Drucksystem). Eine Datenschnittstelle und eine elektrische Schnittstelle können in letzterer Variante mittels einer jeweils durchgehende Leitung oder einem Steckverbinder implementiert sein.

Mindestens ein Sensor 106 der Vorrichtung 100 ist dazu ausgebildet, den Leiter 102 zu erfassen. Durch eine Materialschnittstelle 156 nimmt die Vorrichtung 100 den vom Drucker 200 ausgegebenen Schlauch 214 auf. Der Schlauch ist bedruckt und kann noch geschlossen sein, d.h. die obere und die untere Schlauchhälften können endseitig oder innenseitig (beispielsweise flächig) verbunden sein.

Die Schneideinheit 120 und die Öffnereinheit 122 sind Beispiele für Aktoren der Vorrichtung 100. Mindestens einer der Aktoren 120 und 122 der Vorrichtung 100 ist dazu ausgebildet und/oder angesteuert, in Reaktion auf die Erfassung des bedruckten Schlauchs (beispielsweise mittels des Sensors 104), die Kommunikation mit dem Drucker 200 (beispielsweise über die Datenschnittstelle 158) und/oder die Erfassung des Leiters 102 (beispielsweise mittels des Sensors 106) mittels des vom Drucker 200 ausgegebenen Druckerzeugnisses 214 die Kennzeichnung 101 bereitzustellen, vorzugsweise auf dem Leiter 102 anzuordnen (d.h. zu applizieren).

Vorzugsweise umfasst die Vorrichtung 100 ferner eine elektrische Schnittstelle 154 zur Spannungsversorgung der Vorrichtung 100 über den Drucker 200. Alternativ oder ergänzend kann die Vorrichtung 100 eine eigene Spannungsversorgung umfassen, beispielsweise ein Netzteil zum Anschluss an ein Stromnetz oder einen wieder aufladbaren elektrischen Energiespeicher (beispielsweise eine Sekundärzelle).

Optional umfasst die Vorrichtung 100 eine Steuereinheit 130 oder Regeleinheit 130, die dazu ausgebildet ist, mindestens einen oder jeden Aktor (beispielsweise den Aktor 120 und/oder 122) der Vorrichtung 100 zu steuern bzw. regeln, beispielsweise gemäß einer Regelgröße, deren Ist-Wert vom Sensor 106 als Messwerten erfasst wird. Alternativ oder ergänzend kann die Steuereinheit 130 oder die Regeleinheit 130 dazu ausgebildet sein, die Messwerte des mindestens einen Sensors 104 und/oder 106 zu erfassen und über die Datenschnittstelle 158 an den Drucker zu senden. Alternativ oder ergänzend kann die Steuereinheit 130 oder die Regeleinheit 130 dazu ausgebildet sein, über der Datenschnittstelle 158 Steuerbefehle zur Steuerung oder Regelung des mindestens einen Aktors (beispielsweise den Aktor 120 und/oder 122) vom Drucker 200 zu empfangen und/oder aufgrund von Messwerten des mindestens einen Sensors 106 Steuerbefehle zur Steuerung oder Regelung des Druckers 200 an den Drucker 200 zu senden.

Die Kennzeichnung 101 ist vorzugsweise der geöffnete, geschnittene und bedruckte Schlauch, welcher ebenfalls mit dem Bezugszeichen 101 bezeichnet wird. Das Druckerzeugnis 214 kann ein vom Drucker 200 bedrucktes Druckmedium 208 sein. Das Druckmedium 208 umfasst den Schlauch. Der Schlauch kann ein sogenannter Endlos-Schlauch sein, beispielsweise kann eine Größe eines Magazins des Schlauchs unabhängig von der Funktion der Vorrichtung sein. Alternativ oder ergänzend kann der Schlauch ein Schrumpfschlauch sein.

Die Kennzeichnung 101 kann einen Abschnitt des Druckerzeugnisses 214 umfassen, beispielsweise einen von der Vorrichtung 100 mittels der Schneideinheit 120 zugeschnittenen Abschnitt des Druckerzeugnisses 214. Die Kennzeichnung 101 kann auch als Etikett bezeichnet werden.

Das Applizieren der Kennzeichnung 101 am Leiter 102 kann eine formschlüssige (beispielsweise in der Längsrichtung des Leiters 102 verschiebbare) Verbindung der Kennzeichnung 101 mit dem Leiter 102 umfassen. Hierzu kann der Schlauch 101 und/oder ein (vorzugsweise durch Wärmeeinwirkung) endseitig mit sich selbst verklebbare Folie (beispielsweise eine verschweißbare thermoplastische Folie) umfassen.

Das optionale Anordnen oder Applizieren der Kennzeichnung 101 auf dem Leiter 102 mittels eines der Aktoren, vorzugsweise mittels der Öffnereinheit 122, umfasst ein Öffnen des geschnittenen Schlauchs 214 und ein Aufschieben des geöffneten Schlauchs 101 als Kennzeichnung auf den Leiter 102.

Die Vorrichtung 100 kann dazu ausgebildet sein, die Kennzeichnung 101 auf dem Leiter 102 zu applizieren, wenn der Leiter 102 bereits montiert ist (beispielsweise wenn ein entferntes Ende des Leiters kontaktiert ist oder beide Enden des Leiters kontaktiert sind und/oder ein oder beide Ende des Leiters nicht freie Enden sind). Vorzugsweise wird der Leiter 102 beim Applizieren nicht um eine Querachse quer zur Längsrichtung 210 des Leiters 102 gedreht und/oder nicht um eine Längsachse parallel zur Längsachse des Leiters 102 gedreht werden und/oder ruhen.

Die am Leiter 102 applizierte Schlauch 101 kann unverlierbar sein. Alternativ oder ergänzend kann eine bedruckte Fläche des applizierten Schlauch 101 eben oder im Wesentlichen krümmungsfrei sein. Beispielsweise kann die bedruckte Fläche zwischen zwei Prägungen im Schlauch 101 angeordnet sein, die parallel zur Längsrichtung sind. Dadurch kann die bedruckte Fläche gut lesbar und/oder hinreichend groß sein.

Die Kennzeichnung 101 kann beständig sein, beispielsweise hinsichtlich der Bedruckung (vorzugsweise indem der Drucker 200 ein Thermotransferdrucker ist), hinsichtlich des Materials des Druckmediums 208 (beispielsweise indem der Schlauch als Druckmedium 208 einen Thermoplast umfasst) und/oder hinsichtlich der Befestigung am Leiter 102 (beispielsweise indem die Kennzeichnung 101 formschlüssig, reibschlüssig und/oder stoffschlüssig mit dem Leiter 102 verbunden ist).

Der Schlauch 101 als Kennzeichnung kann platzsparend sein, beispielsweise so dass mehrere jeweils eine solchen Kennzeichnung 101 tragende Leiter 102 eng aneinandergereiht werden können. Alternativ oder ergänzend kann die Kennzeichnung 101 verschiebbar und/oder drehbar sein, beispielsweise indem die Kennzeichnung 101 formschlüssig mit dem Leiter 102 verbunden ist. Dadurch kann die Kennzeichnung 101 auf nahe beieinanderliegenden Leitern 102 (beispielsweise Kabeln) ausgerichtet werden.

Das in Fig. 1 gezeigte erste Ausführungsbeispiel der Vorrichtung 100 ist an einem Ausführungsbeispiel des allgemein mit Bezugszeichen 200 bezeichneten Druckers befestigt. Während das Ausführungsbeispiel des Druckers 200 in der Fig. 1 im Zusammenhang mit dem ersten Ausführungsbeispiel der Vorrichtung 100 dargestellt und beschrieben ist, können auch die weiteren Ausführungsbeispiele der Vorrichtung 100 (vorzugsweise wechselweise) am Ausführungsbeispiel des Druckers 200 befestigbar sein.

Das Ausführungsbeispiel des Druckers 200 umfasst einen Druckkopf 202, eine Druckwalze 204, eine Lichtschranke 212 zum Erfassen des Druckmediums 208 (d.h. des zu bedruckenden Materials), beispielsweise zum Erkennen von Steuer-Löchern, (beispielsweise schwarzen) Steuer-Markierungen, einem Anfang und/oder einem Ende des Druckmediums 208. Das Druckmaterial 206 ist beispielsweise ein Farbband.

Das zu bedruckende Material 208 wird zusammen mit dem Farbband 206 zwischen dem Druckkopf 202 und der Druckwalze 204 geführt. Die Lichtschranke 212 kann beim Bedrucken einen Anfang des Druckmediums 208 erfassen, um eine Positionierung des Druckbildes innerhalb des Abschnitts des Druckerzeugnisses 214, mittels dem die Kennzeichnung 101 gebildet ist, zu gewährleisten.

Der Drucker 200 umfasst Schnittstellen, die jeweils den Schnittstellen der Vorrichtung 100 räumlich zugeordnet sind und/oder funktional diesen entsprechen. Die räumlich einander zugeordneten und/oder funktional entsprechenden Schnittstellen sind paarweise miteinander verbunden oder verbindbar.

Der Drucker 200 umfasst vorzugsweise eine mechanische Schnittstelle 252, die mit der mechanische Schnittstelle 152 der Vorrichtung 100 verbunden oder verbindbar ist oder in Austausch steht oder bringbar ist. Vorzugsweise impliziert die räumliche Zuordnung, dass bei einer Verbindung (z. B. einer Verriegelung) der mechanischen Schnittstelle 152 und 252 auch die weiteren Schnittstellen der Vorrichtung 100 und des Druckers 200 jeweils miteinander verbunden sind oder in Austausch stehen.

Alternativ oder ergänzend umfasst der Drucker 200 eine Datenschnittstelle 258, die mit der Datenschnitte 158 der Vorrichtung 100 verbunden oder verbindbar ist oder in Austausch steht oder bringbar ist. Alternativ oder ergänzend umfasst der Drucker 200 eine Materialschnittstelle 256, die mit der Materialschnittstelle 156 der Vorrichtung 100 verbunden oder verbindbar ist oder in Austausch steht oder bringbar ist.

Beispielsweise stehen die Materialschnittstellen 156 und 256 zum Austausch des Druckerzeugnisses 214 in Verbindung oder sind in Austausch bringbar. Die Datenschnittstellen 158 und 258 stehen in Verbindung zum Austausch von Messdaten der jeweiligen Sensoren 104, 106 und/oder 212 und/oder der Steuerbefehle von der Steuereinheit 130 der Vorrichtung und/oder von einer Steuereinheit 230 des Druckers 200.

Optional umfasst der Drucker 200, wie beispielhaft in Fig. 1 gezeigt, eine Schnittstelle 222 zu einem Computer oder Computernetzwerk 300 (beispielsweise einen Anschluss an das Internet). Über die Schnittstelle 222 kann der Drucker 200 (beispielsweise dessen Steuerung 230) Druckaufträge empfangen.

Die Vorrichtung 100 zur Bereitstellung des Schlauchs 101 als Kennzeichnung, vorzugsweise zur umlaufend geschlossenen Anordnung des Schlauchs 101 um den Leiter 102 (d.h. der Applikation der Kennzeichnung 101 auf dem Leiter 102), wird auch als Applikator bezeichnet.

Ein Ausführungsbeispiel der Vorrichtung 100 (beispielsweise das vorgenannte erste Ausführungsbeispiel der Vorrichtung 100) oder ein Drucksystem umfassend ein Ausführungsbeispiel der Vorrichtung 100 und ein Ausführungsbeispiel des Druckers 200 (beispielsweise das vorgenannte Ausführungsbeispiel des Druckers 200) sind dazu ausgebildet, eine oder mehrere der folgenden Funktionen und Verfahrensschritte auszuführen.

Die Vorrichtung 100 und der Drucker 200 können Operationen (die auch als Aktionen bezeichnet werden), d.h. einen Satz von einem oder mehreren Verfahrensschritten, abwechselnd durchführen, insbesondere beim Bereitstellen des Schlauchs 101 oder Anordnen des Schlauchs 101 (d.h. dem Applizieren der Kennzeichnung 101 auf dem Leiter 102). Dabei kommunizieren die Vorrichtung 100 (oder deren Steuerung 130) und der Drucker 200 (oder deren Steuerung 230) über die Datenschnittstellen 158 bzw. 258 miteinander, beispielweise um Parameter (auch: Operationsparameter), Anfang, Abschluss und/oder Zeitpunkt der Operationen (vorzugsweise der jeweils nächsten Operation) auszutauschen oder aufeinander abzustimmen. Das abwechselnde Durchführen der Operationen kann einen verschachtelten Betrieb der Vorrichtung 100 und des Drucker 200 umfassen.

In einer ersten Implementierung ist eine Gesamtablaufsteuerung im Drucker 200, beispielsweise in der Steuereinheit 230 (vorzugsweise mittels einer in der Steuereinheit 230 gespeicherten Firmware) hinterlegt (z.B. implementiert oder ausführbar gespeichert). Die Gesamtablaufsteuerung kann das Bedrucken des Druckmediums 208 und das Applizieren des aus dem Bedrucken resultierenden Druckerzeugnisses 214 umfassen.

Eine Ablaufsteuerung der Vorrichtung 100 kann in der Vorrichtung 100 und/oder im Drucker 200 hinterlegt (z.B. implementiert oder ausführbar gespeichert) sein. Die Ablaufsteuerung der Vorrichtung 100 kann (vorzugsweise ausschließlich) das Bereitstellen oder Applizieren der Kennzeichnung 101 mittels des Druckerzeugnisses 214 auf dem Leiter 102 umfassen. Beispielsweise wird die Kennzeichnung 101 bereitgestellt oder auf dem Leiter 102 angeordnet oder appliziert, indem die Ablaufsteuerung der Vorrichtung 100 ausgeführt wird.

Mit anderen Worten, das Ausführen der Ablaufsteuerung der Vorrichtung 100 kann teilweise oder vollständig in der Vorrichtung 100 oder ausschließlich im Drucker 200 ausgeführt werden. Jedenfalls bewirkt das Ausführen der Ablaufsteuerung der Vorrichtung 100 das Bereitstellen oder Applizieren der Kennzeichnung 101 auf dem Leiter mittels der Vorrichtung 100.

In einer ersten Variante der ersten Implementierung ist die Ablaufsteuerung der Vorrichtung 100 im Drucker 200 hinterlegt. Die Vorrichtung 100 hat vorzugsweise keinerlei Ablaufsteuerung, beispielsweise auch keine Steuereinheit 130. Die Steuereinheit 230 des Druckers (beispielsweise die Firmware des Druckers 200 in der Steuereinheit 230) ist dazu ausgebildet, über die Datenschnittstellen 158 und 258 die Aktoren (beispielsweise 120 und/oder 122) und Sensoren (beispielsweise 104 und/oder 106) des Applikators 100 (vorzugsweise einzeln) zu steuern (oder anzusteuern) bzw. (vorzugsweise einzeln) abzufragen (oder zu erfassen).

In einer zweiten Variante der ersten Implementierung ist die Ablaufsteuerung der Vorrichtung 100 in der Vorrichtung 100 hinterlegt (z.B. implementiert oder ausführbar gespeichert). Beispielsweise umfasst die Vorrichtung 100 die Steuereinheit 130 oder die Regeleinheit 130, in der die Ablaufsteuerung der Vorrichtung 100 hinterlegt (z.B. implementiert oder ausführbar gespeichert) ist. Vorzugsweise ist die Steuereinheit 130 oder die Regeleinheit 130 dazu ausgebildet, das Bereitstellen oder Applizieren zu steuern bzw. zu regeln. Zur Vereinfachung und ohne Beschränkung wird hierin auf die Steuereinheit 130 Bezug genommen, d.h. die Funktion einer Regelung ist optional umfasst.

Das Ausführen der Ablaufsteuerung (vorzugsweise in der Steuereinheit 130) wird vom Drucker 200 (beispielsweise der Steuereinheit 230, vorzugsweise mittels der Druckerfirmware) gestartet. Dazu kann die Vorrichtung 100 über die Datenschnittstelle 158 einen Steuerbefehl empfangen oder über die elektrische Schnittstelle 154 bestromt werden. Sobald eine Operation der Vorrichtung 100 erforderlich ist, gibt der Drucker 200 (beispielsweise die Steuereinheit 230, vorzugsweise mittels der Druckerfirmware) über die Datenschnittstelle 258 bzw. 158 ein Signal als Steuerbefehl an die Vorrichtung 100.

Vorzugsweise wartet der Drucker 200 während die Vorrichtung 100 die angeforderte (beispielsweise mittels des Steuerbefehls initiierte) Operation durchführt. Sobald die Vorrichtung 100 über die Datenschnittstelle 158 bzw. 258 ein Signal als Steuerbefehl des Abschlusses der Operation sendet (z.B. meldet), setzt der Drucker 200 die Ausführung der Gesamtablaufsteuerung fort.

Optional gibt das Signal vom Applikator 100 an den Drucker 200 einen Status des Abschlusses der Operation an. Beispielsweise kann der Status den erfolgreichen Abschluss oder einen bei der Ausführung der Operation aufgetretenen Fehler angeben.

In einer zweiten Implementierung führt die Vorrichtung 100, beispielsweise die Steuereinheit 130 (vorzugsweise mittels einer Firmware des Applikators 100) den Gesamtablauf aus. Mit anderen Worten, die Gesamtablaufsteuerung ist in der Vorrichtung 100, beispielsweise in der Steuereinheit 130 (vorzugsweise mittels einer in der Steuereinheit 130 gespeicherten Firmware) hinterlegt (z.B. implementiert oder ausführbar gespeichert). Indem die Vorrichtung 100 die Gesamtablaufsteuerung ausführt steuert die Vorrichtung 100 den Gesamtablauf.

Der Drucker 200 fungiert im Gesamtablauf als Slave. Der Drucker 200 hat beispielsweise die Hoheit über das Druckbild, d.h. der Drucker 200 (vorzugsweise dessen Steuereinheit 230) führt das Bedrucken als eine Operation des Druckers 200 in Reaktion auf einen entsprechenden Steuerbefehl der Vorrichtung 100 aus. Optional gibt der Drucker 200 einen Steuerbefehl (d.h., ein erstes Startkommando) zur Ausführung der Gesamtablaufsteuerung, beispielsweise da nur der Drucker 200 über Inhalt und/oder das Vorliegen eines Druckauftrags Bescheid weiß.

Zur Realisierung des verschachtelten Betriebes tauschen die Vorrichtung 100 und der Drucker 200 Informationen (beispielsweise Messdaten und/oder Steuerbefehle) mittels der Datenschnittstelle 158 bzw. 258 aus.

Die ausgetauschten Informationen können Messwerte (beispielsweise elektrische Spannungen, elektrische Ströme, elektrische Frequenzen), vorzugsweise Messwerte des Sensors 104 und/oder 106, umfassen, die von der Vorrichtung 100 an den Drucker 200 übergeben (d.h. gesendet) werden. Alternativ oder ergänzend können Messwerte eines Sensors des Druckers 200 (beispielsweise der Lichtschranke 212) vom Drucker 200 an die Vorrichtung 100 übergegen (d.h. gesendet) werden. Die Vorrichtung 100 oder der Drucker 200 können auf Grundlage der Messwerte Parameter der Ablaufsteuerung bestimmen (beispielsweise berechnen) und/oder die Messwerte oder die Parameter über die Schnittstelle 222 an den Computer oder das Computernetzwerk 300 (beispielsweise an eine Applikationssoftware) weiterleiten.

Beispielsweise kann der Sensor 106 einen Durchmesser oder Umfang des Leiters 102 (oder des prolaten Objekts um seine Längsachse) erfassen. Die Steuereinheit 130 und/oder die Steuereinheit 230 können eine Länge eines Vorschubs des Druckmediums 208 und/oder eine Wahl des Druckmediums 208 bestimmen, beispielsweise abhängig vom erfassten Durchmesser oder Umfang.

Weiterhin können diese Messwerte bei überschreiten eines definierten Schwellwertes als digitales Signal (beispielsweise entweder als Zustand "0" oder Zustand "1") an der Datenschnittstelle 158 bzw. 258 übergeben werden, um dem jeweils anderen (Drucker 200 bzw. Vorrichtung 100) das Erreichen eines definierten Zustandes (beispielsweise den Abschluss einer Operation) anzugeben. Beispielsweise kann das Erreichen einer Endlage oder eines Referenzpunkts eines Aktors (beispielsweise des Aktors 120 und/oder 122) angezeigt werden.

Eine Referenzfahrt eines Aktors des Applikators 100 (beispielsweise des Aktors 120 und/oder 122) kann dazu dienen, den Aktor (d.h. einen mit einem Mechanismus des Applikators 100 verbundenen Antrieb) mechanisch an eine bestimmte Position des Aktors (d.h. des Mechanismus) zu fahren, die als Referenzposition bezeichnet wird. Ein Steuerbefehl vom Drucker 200 oder ein Verfahrensschritt der vom Applikator 100 ausgeführten Operation, Ablaufsteuerung und/oder Gesamtablaufsteuerung kann eine Bewegung (beispielsweise einen Fahrauftrag) des Aktors umfassen, wobei die Referenzposition als Referenzpunkt für die Bewegungen dient.

Wenn die Steuereinheit 130 der Vorrichtung 100 (beispielsweise die Applikatoren-Firmware) aus Messwerten (die beispielsweise vom Drucker 200 übergeben wurden oder vom Sensor 104 und/oder 106 erfasst wurden) einen oder mehrere Parameter des Bereitstellens oder Applizierens (d.h. der Ablaufsteuerung) berechnet, kann dieser bzw. können diese entsprechend einem Kommunikationsprotokoll über die Datenschnittstelle 158 und 258 an die Steuereinheit 230 des Druckers 200 (vorzugsweise an dessen Druckerfirmware) übergeben werden. Weiterhin kann die Steuereinheit 130 der Vorrichtung 100 (vorzugsweise dessen Applikatoren-Firmware) auch vom Drucker 200 erfasste Messdaten (beispielsweise Messdaten der Lichtschranke 212) zum Steuern der Ablaufsteuerung der Vorrichtung 100 (beispielsweise als Parameter des Bereitstellens oder Applizierens) verwenden.

Der Drucker 200 kann dazu ausgebildet sein, normale Etiketten zu bedrucken, beispielsweise wenn an der mechanischen Schnittstelle 152 und/oder der Datenschnittstelle 158 keine Vorrichtung 100 befestigt ist.

Der Drucker 200 kann ein Thermotransferdrucker sein. Der Thermotransferdrucker kann eine kontrastreiche und beständige Kennzeichnung 101 ermöglichen. Der Drucker 200 kann beispielsweise ein Thermotransfer-Rollendrucker sein.

Das Ausführungsbeispiel des Druckers 200 umfasst einen vor dem Druckkopf 202 angeordneten Abroller 216 des Druckmediums 208, einen vor dem Druckkopf 202 angeordneten des Abroller 218 des Druckmaterials 206, und einen nach dem Druckkopf 202 angeordneten Aufwickler 220 des Druckmaterials 206.

Eine elektrische Schnittstelle 254 des Drucker 200 ist dazu ausgebildet, die am Drucker 200 befestigte Vorrichtung 100 über dessen elektrische Schnittstelle 154 mit elektrischer Energie zu versorgen.

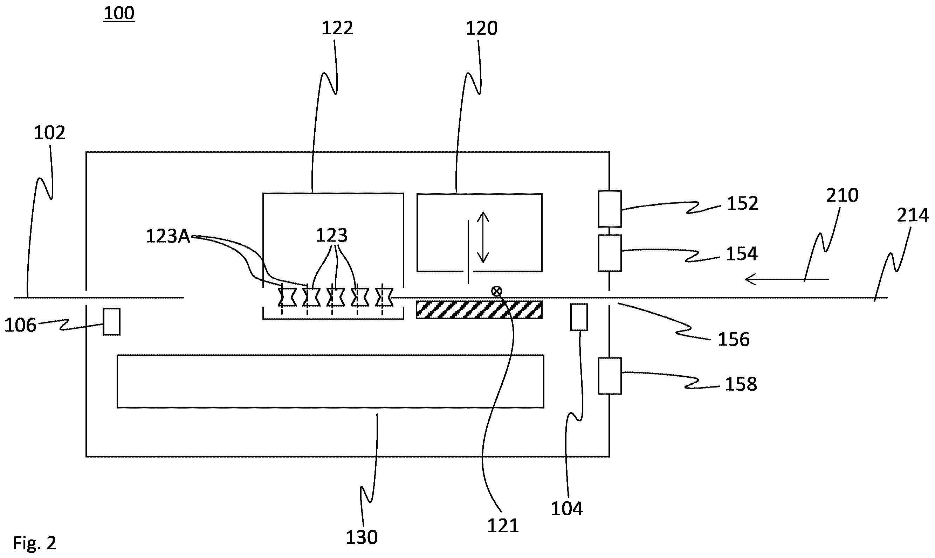

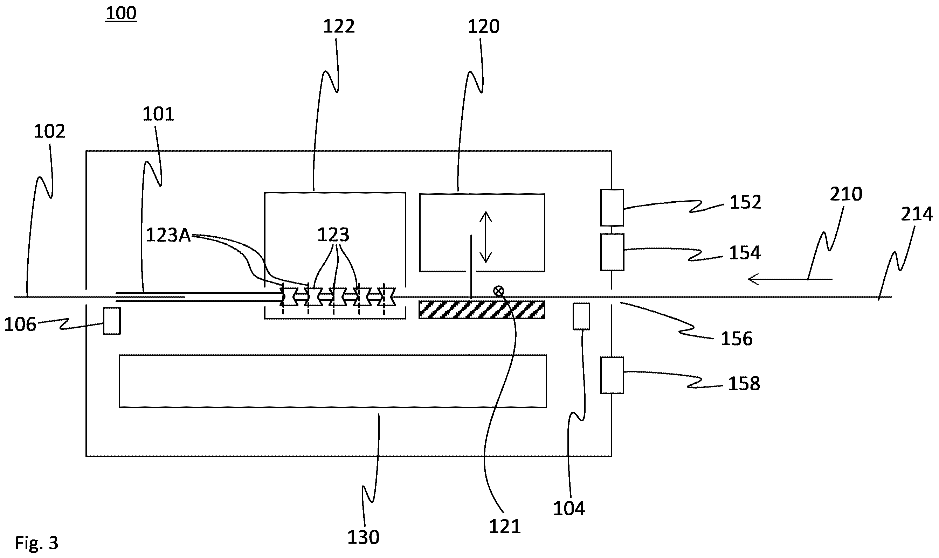

Die Fig. 2 und 3 zeigen eine schematische Schnittansicht eines zweiten Ausführungsbeispiels der Vorrichtung 100 zur Bereitstellung) einer gedruckten Kennzeichnung in einem ersten Zustand bzw. zweiten Zustand des Bereitstellens (beispielsweise des Applizierens).

Das zweite Ausführungsbeispiel der Vorrichtung 100 kann eigenständig oder in Weiterbildung des ersten Ausführungsbeispiels der Vorrichtung 100 realisiert sein. Merkmale der ersten und zweiten Ausführungsbeispiele der Vorrichtung 100, die mit gleichen Bezugszeichen bezeichnet sind, können übereinstimmen oder austauschbar sein.

Das zweite Ausführungsbeispiel der Vorrichtung 100 ist dazu ausgebildet, einen Schlauch (beispielsweise einen Schrumpfschlauch) als Druckmedium 208 bzw. einen bedruckten Schlauch als Druckerzeugnis 214 bzw. einen geöffneten Schlauch 101 als Kennzeichnung bereitzustellen und/oder auf den Leiter 102 zu schieben oder aufzustecken. Beim Bedrucken des Schlauchs und/oder beim Zuschneiden (beispielsweise mittels des ersten Aktors 120 der Vorrichtung 100) wird der Schlauch flach gepresst, wodurch dessen abgeschnittenes Ende oder zumindest ein Abschnitt des bedruckten Schlauchs geschlossen sein kann, d.h. die Schnittkante bzw. die Innenseiten des Schlauchs 214 (d.h. die obere und untere Schlauchhälften Schlauchs 214) haften aneinander.

Der zweite Aktor als Öffnereinheit 122 ist dazu ausgebildet, die zusammenhaftende Schnittkante des bedruckten Schlauchs und/oder die aneinander haftenden Innenseiten (d.h. die Schlauchhälften) des bedruckten Schlauchs 214 zu öffnen. Dazu umfasst die Öffnereinheit 122 (vorzugsweise taillierte) Rollen 123, die paarweise auf gegenüberliegende seitliche Kanten des bedruckten Schlauchs 214 eine Kraft auf die Kante des Schlauchs ausüben, um die Schnittkante des Schlauchs zu öffnen und/oder die Innenseiten des Schlauchs voneinander zu lösen. In der schematischen Darstellung der Fig. 2 und 3 ist jeweils eines der paarweise auf gegenüberliegend angeordneten Rollen 123 sichtbar, da die Paare senkrecht zur Längsrichtung bzw. Bewegungsrichtung 210 fluchten.

In dem in Fig. 3 gezeigten zweiten Zustand ist der bedruckte Schlauch 214 mittels der Öffnereinheit 122 geöffnet, aufgrund eines Vorschubs (beispielsweise der Öffnereinheit 122 und/oder des Druckers 200) als Kennzeichnung 101 bereitgestellt und/oder um den Leiter 102 umlaufend geschlossen angeordnet (beispielsweise auf den Leiter 102 geschoben) und mittels der Schneideinheit 120 endseitig abgeschnitten.

Die Rollen 123 sind um zur Längsrichtung 210 und zur Querrichtung 121 senkrechte (beispielsweise vertikale) Drehachsen 123A drehbar, vorzugsweise angetrieben zum Vorschub des bedruckten Schlauchs 214.

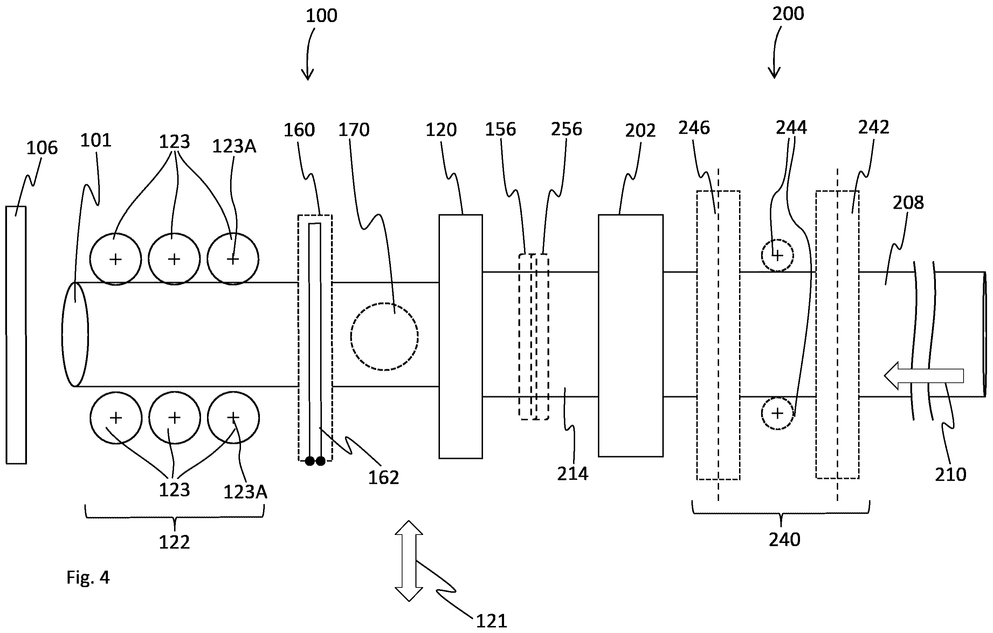

Fig. 4 zeigt eine schematische Draufsicht eines dritten Ausführungsbeispiels der Vorrichtung 100 zur Bereitstellung eines Schlauchs als Kennzeichnung. Das dritte Ausführungsbeispiel der Vorrichtung 100 kann eigenständig oder in Weiterbildung des ersten und/oder zweiten Ausführungsbeispiels der Vorrichtung 100 realisiert sein. Merkmale der ersten, zweiten und/oder dritten Ausführungsbeispiele der Vorrichtung 100, die mit gleichen Bezugszeichen bezeichnet sind, können übereinstimmen oder austauschbar sein.

Die Vorrichtung 100 umfasst einen Druckkopf 202 oder eine Materialschnittstelle 156 zur Aufnahme eines Schlauchs als Druckerzeugnis 214 von einem Druckkopf, eine Schneideinheit 120 und eine Öffnereinheit 122. Die Öffnereinheit 122 kann eine Rollengasse mit Rollen 123 umfassen.

Optional ist in den Transportprozess eine Rollenanordnung 240 (vorzugsweise eine Rollenpaaranordnung) eingebaut. Die Rollenanordnung 240 umfasst mindestens zwei Rollenpaare, beispielsweise 2 oder 3 Rollenpaare. Ein erstes Rollenpaar 242 ist in Querrichtung 121 (beispielsweise horizontal) angeordnet. Ein (in Längsrichtung 210) weiteres Rollenpaar 242 ist senkrecht zur Längsrichtung 210 und senkrecht zur Querrichtung 121 (beispielsweise vertikal) angeordnet.

Die Rollenanordnung 240 kann vor der Flachhalteeinrichtung 160 angeordnet sein. Ein optionales drittes Rollenpaar 246 (gezählt in der Längsrichtung 210) der Rollenanordnung 240 kann in der Querrichtung 121 (beispielsweise horizontal) angeordnet sein.

Die Drehachsen eines Rollenpaars sind jeweils zueinander parallel. Die Rollen eines Rollenpaares sind zur Förderung des bedrucken Schlauchs 214 angeordnet, beispielsweise entsprechend beabstandet und/oder kraftbeaufschlagt senkrecht zur jeweiligen Drehachse.

Optional kann das horizontale Rollenpaar die Fachhalteeinheit 160 bilden. Zumindest das Rollenpaar mit vertikaler Drehachse kann Rollen mit einer umlaufenden Rille aufweisen.

Vorzugsweise ist die Öffnereinheit 122 oder die Flachhalteeinheit 160 dazu ausgebildet, den Schlauch 124 durch einseitiges Erwärmen aufzuweiten. Beispielsweise umfasst die Flachhalteeinheit 160 ein Heizelement 162 (vorzugsweise einen Heizdraht). Das Heizelement 162 kann in einer stationären und/oder längsbeweglichen Niederhalterkante (beispielsweise den nachstehen beschriebenen Niederhalterkanten 700 und/oder 710) in der Flachhalteinheit 160 oder beabstandet dazu angeordnet sein. Durch das einseitige Erwärmen zieht sich der Schlauch 214 (beispielsweise ein Schrumpfschlauch) an einer Seite zusammen und wölbt sich zwangsläufig aus.

Optional kann entgegen der Längsrichtung auf ein abgeschnittenes Ende des Schlauchs 214 Luft geblasen oder in den Schlauch 214 eingeblasen werden zum Öffnen der oberen und unteren Schlauchhälften. Alternativ oder ergänzend kann die Öffnereinheit 122 ein Nadelrad oder Nadelräder umfassen, die in den Schlauch 214 einstechen und diesen bei Vorschub öffnen und/oder aufweiten.

Eine Feststellung des Schlauches 214 kann mittels des eingeführten Leiters 101 optisch, induktiv oder kapazitiv erfolgen.

Die Öffnerrollen 123 sind vorzugsweise in der Querrichtung 121 beweglich, beispielsweise üben die Öffnerrollen 123 eine vorbestimmte und/oder geregelte Kraft auf die Längskante des bedruckten Schlauchs 214 aus.

Das Bereitstellen des geöffneten, geschnittenen und bedruckten Schlauchs 101 (beispielsweise einschließlich des Druckens mittels des Druckers 200) kann durch einen Sensor 106 gesteuert oder initiiert werden. Der Sensor 106 kann die Präsenz des Leiters 102 (beispielsweise berührungslos) erfassen. Alternativ oder ergänzend kann der Sensor 106 einen Taster (auch: Bedientaste) umfassen, der von einem Nutzer als Steuersignal zur Bereitstellung (d.h. Bereitstellungswunsch) betätigt wird. Die Bedientaste kann so positioniert sein, dass sie mit der Hand betätigt werden kann, die den Leiter 102 hält.

Der Öffnungsvorgang kann durch Ziehen an den Außenflächen, d.h., der oberen und unteren Schlauchhälften, unterstütz werden. Optional umfasst die Öffnereinheit 122 oder eine Unterdrucköffnereinheit 170 zwei oder mindestens zwei Saugnäpfe, die auf die Fläche des Schlauches (beispielsweise jeweils auf die obere und untere Schlauchhälfte) gedrückt werden.

Alternativ oder ergänzend kann Luft entgegen der Förderrichtung 210, d.h., endseitig an der Schnittstelle des Schlauchs, eingeblasen werden. Hierbei sind die Längskanten (d.h. die Außenkanten) des Schlauchs in den Öffnerrollen 123 (beispielsweise den Rollenpaaren der Öffnereinheit 122) fixiert und der Schlauch darf nicht oder nicht zu weit aus der Öffnereinheit 122 (d.h. dem in Förderrichtung 210 letzten den Rollenpaaren) herausragen.

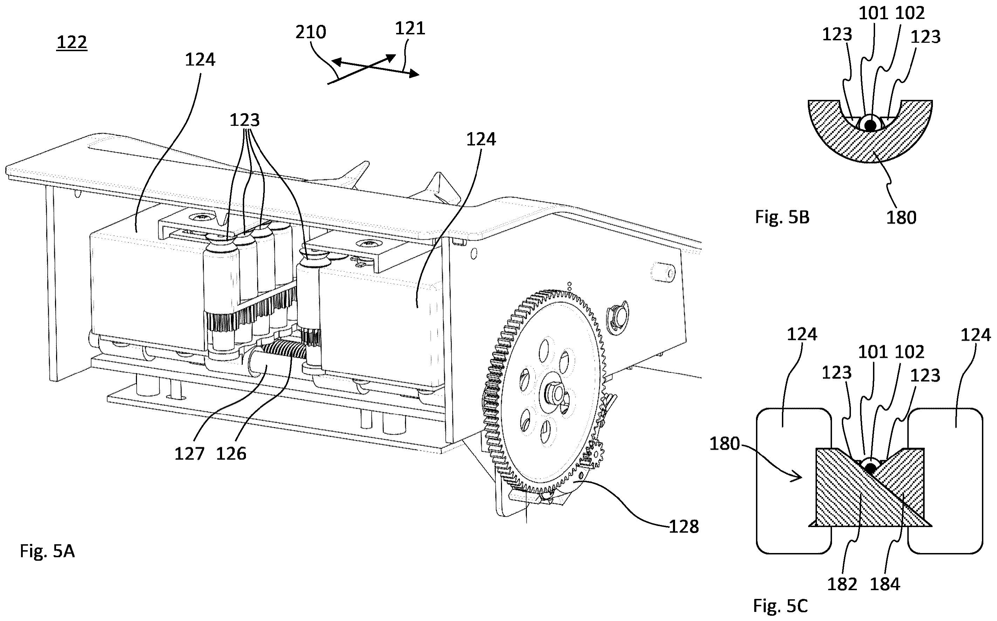

Fig. 5A zeigt eine schematische perspektivische Ansicht einer beispielhaften Öffnereinheit 122, die in Ausführungsbeispielen der Vorrichtung einsetzbar ist.

Die Öffnereinheit 122 umfasst Öffnerrollen 123, die durch eine Vorspannung in der Querrichtung 121 hin zum Schlauch 214 eine Walkarbeit erzeugen und dadurch den (vorzugsweise mittels der Flachhalteeinheit 160) flachgedrückten Schlauch 214 öffnen oder voröffnen. Das Öffnen oder Voröffnen kann durch ein Bewegungsprofil der Öffnerrollen 123 ausgeführt werden. Das Bewegungsprofil kann Teil des Bereitstellens sein. Die Öffnerrollen 123 sind dabei motorisch angetrieben zur Drehung (Rotation) um die Drehachsen 123A. Eine synchrone Rotation der Rollen 123 ist über Zahnräder oder einen Riemenantrieb realisiert.

Die Öffnerrollen 123 sind vorzugsweise profiliert, z.B. V-Förmig oder tailliert.

Vorzugsweise wird der Schlauch 214 (beispielsweise ein Schrumpfschlauch) somit nur von außen geöffnet.

Die Öffnerrollen 123 drücken den Schlauch 214 punktuell von außen auf. Alternativ oder ergänzend kann der Schlauch 214 durch eine Linienberührung von außen geöffnet werden. Letzteres ist z.B. durch Riemen um die Öffnerrollen 123 realisierbar. Die Riemen können Flachriemen sein oder (beispielsweise wie die Öffnerrollen 123) profiliert sein.

Der Öffnereinheit 122 umfasst in Querrichtung 121 bewegliche Schlitten 124. Beispielsweise sind die Schlitten 124 beweglich mittels eines Lineargetriebes 126 angetrieben von einem Antrieb 128 der Schlitten 124. Eine Querführung 127 der Schlitten 124 kann Gleitlager umfassen.

Die Schlitten 124 können mindestens eine der folgenden Positionen oder Stellungen einnehmen, beispielsweise gesteuert von der Steuereinheit 130 und/oder 230: In einer Förderstellung kann durch Drehung der Rollen 123 der Schlauch 214 in der Längsrichtung 210 vor- und/oder zurückbewegt werden. In Walkstellung kann das Walken des Schlauchs 214 zum Öffnen ausgeführt werden. Walkstellung und Förderstellung der Schlitten können übereinstimmen. In einer Freigabestellung können die Schlitten auseinanderfahren, beispielsweise zur Entnahme des geöffneten Schlauchs 101.

Die Öffnerrollen 123 sind auf beweglichen Schlitten 124 positioniert, welche es ermöglichen den Schlauch 214 weiter zu öffnen. Die Schlitten 124 können motorisch angetrieben sein. Die Öffnerrollen 123 sind auf beweglichen Schlitten positioniert, welche es ermöglichen sich selbstständig auf verschiedene Schlauchgrößen zu adaptieren (Breiteneinstellung), beispielsweise abhängig von einer mittels eines Breitensensors gemessen Breite des Schlauchs 214.

Die Steuerung 130 und/oder 230 kann dazu ausgebildet sein, die Öffnerrollen 123 gemäß einem Bewegungsprofile zu bewegen. Das Bewegungsprofil ist eine Kombination aus einer Vorschubbewegung in der Längsrichtung 210 durch die Drehung der Öffnerrollen 123 und einer Bewegung der Schlitten 124 auf denen die Öffnerrollen 123 drehbeweglich gelagert sind. Durch das oder die Bewegungsprofile kann der Schlauch 214 geöffnet werden, auf den Leiter 102 aufgeschoben werden (beispielsweise auf dem Leiter 102 angeordnet bereitgestellt werden) und/oder aus dem Applikator entnommen werden (beispielsweise anordenbar bereitgestellt werden).

Das Bewegungsprofil kann durch (vorzugsweise mittels der Sensoren 104, 106 und/oder 212) gemessene (d.h. dynamisch erfasste) Materialgrößen, wie z.B. einer Breite des Schlauches 214, während der Ausführung des Bewegungsprofils (d.h. dynamisch) angepasst werden.

Die Schlauchbreite kann aus Druckdaten (beispielsweise vom Drucker 200 oder dem Computer oder Computernetzwerk 300) erhaltenen und/oder von einem Breitensensor (beispielsweise einem der Sensoren 104, 106 und/oder 212) erfasst werden. Der Breitensensor kann ein Zeilensensor (beispielsweise mit einem ladungsgekoppelten Bauteil oder CCD) oder eine Kamera (beispielsweise mit einem komplementären Metall-Oxid-Halbleiter oder CMOS) umfassen.

Der Breitensensor (beispielsweise der Zeilensensor) ist unmittelbar an der Materialschnittstelle 156 oder 256 (d.h. dem Auslass des Drucker 200) oder zwischen der Flachhalteeinheit 160 und der Öffnereinheit 122 (d.h. vor dem in Vorschubrichtung 210 ersten Öffnerrollen-Paar) angeordnet. Der Breitensensor kann auch zur Steuerung des Bewegungsprofils genutzt werden.

Der Sensor 106 kann dazu ausgebildet sein, zu erfassen, dass ein zu kennzeichnendes Objekt 102 (beispielsweise der Leiter, vorzugsweise ein Kabel) in die Vorrichtung 100 eingelegt ist (oder wird) oder in den bereitgestellten geöffneten Schlauch 101 eingeführt ist (oder wird).

Mittels des Sensor 106 kann das Bewegungsprofil gesteuert werden. Beispielsweise kann das Anordnen (beispielsweise ein Auffädeln) des bereitgestellten geöffneten Schlauchs 101 (d.h. eines Schlauchstücks) auf dem Leiter 102 und/oder ein Freigeben des auf dem Leiter 102 angeordneten Schlauchs 101 durch seitliches Wegfahren der Öffnerrollen 123 (d.h. durch Auseinanderbewegen der Schlitten 124 in Querrichtung 121).

Der Sensor 106 kann in Vorschubrichtung 210 verschiebbar sein, beispielsweise damit der Leiter 102 (beispielsweise anwendungsspezifisch und/oder nutzergesteuert) entgegen der Längsrichtung 210 unterschiedlich weit in die Vorrichtung 100 eingeführt oder eingesetzt werden kann, bevor das Bewegungsprofil in Reaktion auf die Erfassung des Leiters 102 (als Steuersignal zur Bereitstellung) initiiert oder fortgesetzt wird.

Der Sensor 106 kann einen Sensor zur Erfassung des Leiters 102 umfassen. Der Sensor kann den Leiter 102 induktiv, kapazitiv, optisch und/oder taktil erfassen. Alternativ oder ergänzend kann der Sensor mindestens eine der folgenden Sensormöglichkeiten implementieren.

Für eine erste Sensormöglichkeit ist der Sensor 106 zwischen zwei benachbarten Rollenpaaren der Öffnereinheit 160 (d.h. Öffnerrollen 123, die an in Querrichtung 121 gegenüberliegenden Stellen am Schlauch 214 anliegen oder in Anlage bringbar sind) angeordnet. Der Sensor 106 (beispielsweise ein kapazitiver oder induktiver Sensor) misst, ob ein Leiter 102 eingeführt worden ist. Durch Verwendung mehrerer Sensoren 106 kann der Nutzer bestimmen, wie weit der Leiter 102 vor dem Auslösen (d.h. dem Initiieren) der Bereitstellung (beispielsweise des Bewegungsprofils) eingeführt sein soll.

Für eine zweite Sensormöglichkeit misst der Sensor 106 (beispielsweise ein kapazitiver oder induktiver Sensor) senkrecht zu Längsrichtung 210 (vorzugsweise auch senkrecht zur Querrichtung 121, beispielsweise in vertikaler Richtung), ob der Leiter 102 als zu kennzeichnendes Objekt in die Vorrichtung 100 eingeführt worden ist.

Optional kann der Sensor 106 in der Längsrichtung 210 verschiebbarer sein, womit der Nutzer bestimmen kann, wie weit der Leiter 102 vor Initiierung des Bereitstellens (beispielsweise vor dem Auslösen des Bewegungsprofils) eingeführt sein soll.

Für eine dritte Sensormöglichkeit kann alternativ oder ergänzend der Breitensensor (der dazu ausgebildet, ist die Schlauchbreite zu messen) ferner die Präsenz des Leiters 102 erfassen. Beispielsweise kann der Breitensensor den Leiter 102 erfassen, falls der Leiter 102 ganz in den Schlauch 101 eingeführt sein soll.

In einer Variante jeder der genannten Sensormöglichkeiten umfasst der Sensor 106 eine Lichtschranke (zur beispielsweise Erfassung des Leiters 102 im Durchlicht oder reflektiv).

Optional kann der Nutzer (d.h. der Bediener der Vorrichtung 100) durch Dateneingabe das Bereitstellen (vorzugsweise das Bewegungsprofil) beeinflussen. Die Dateneingabe (beispielsweise an einer Benutzerschnittstelle der Vorrichtung 100, einer Benutzerschnittstelle des Druckers 200, einer Benutzerschnittstelle des Drucksystems und/oder über den Computer oder das Computernetzwerk 300) kann Parameter des Bereitstellens (vorzugsweise des Bewegungsprofils) umfassen. Die Parameter können eine Öffnungsweite (beispielsweise des geöffneten Schlauchs 101 und/oder eine Ausgabeposition (beispielsweise in Längsrichtung 210) des bereitgestellten Schlauchs 101 umfassen. Beispielsweise können die Parameter im Betrieb geändert und/oder gespeichert werden.

Die Parameter (auch als Operationsparameter bezeichnet) können applikationsspezifisch oder artikelspezifisch sein. Die Operationsparameter können in der Vorrichtung 100, dem Drucker 200 oder der ansteuernden Software des Computers 300 hinterlegt sein. Die Parameter können das Bereitstellen (beispielsweise das Bewegungsprofil) steuern. Die Parameter können ein Vor- oder Zurückfahren des Schlauchs und/oder das Walken des Schlauches steuern oder beeinflussen. Alternativ oder ergänzend können die Parameter festlegen, ob ein Klemmen oder Flachhalten des Schlauchs und/oder ein Voröffnen durchgeführt werden soll.

In jedem Ausführungsbeispiel kann das Einführen des Leiters 102 durch optische Hilfen unterstützt sein, z.B. spiegelnde Flächen, ein Vergrößerungsglas und/oder eine Kamera (deren Bild beispielsweise über die Datenschnittstelle 158 bzw. 258 zum Drucker übertragbar und/oder auf einer Anzeige 209 des Druckers 200 angezeigt ist). Mittels spiegelnder Flächen kann dem Nutzer eine Rückseite des Leiters 102 sichtbar sein.

In jedem Ausführungsbeispiel kann eine Objektzentriereinheit 180 (auch: Zentrierhilfe) zum Einführen oder Positionieren des Leiters 102 vorgesehen sein. Die Objektzentriereinheit 180 kann in Längsrichtung 210 nach der Öffnereinheit 122 angeordnet sein.

Fig. 5B zeigt eine schematische Ansicht einer ersten beispielhaften Objektzentriereinheit 180, die in Ausführungsbeispielen der Vorrichtung 100 einsetzbar ist. Die Objektzentriereinheit 180 kann eine oder mehrere Steckschablonen mit jeweils einer Mulde umfassen, eine verstellbare Mulde und/oder ein (um die Längsrichtung 210 drehbares) Rad mit mehreren Mulden.

Alternativ oder ergänzend kann durch den Schlauch 101 eine Hülse oder Spannzange geschoben werden, die den Leiter 102 greift und durch den Schlauch 101 zieht.

Fig. 5C zeigt eine schematische Ansicht einer zweiten beispielhaften Objektzentriereinheit 180, die in Ausführungsbeispielen der Vorrichtung einsetzbar ist. Die Objektzentriereinheit umfasst zwei bewegliche Prismenhälften 182 und 184, die vorzugsweise zusammen mit den Schlitten 124 verfahren. Dies hilft beim Zentrieren des Leiters 102, sodass dieser einfacher in den Schlauch 101 eingeführt werden kann. Vorzugsweise sind die zwei Prismenhälften 182 und 184 jeweils mit einem der Schlitten 124 bewegt (beispielsweise am jeweiligen Schlitten 124 befestigt). Alternativ oder ergänzend zu den Prismenhälften können Scheren verwendet werden.

Optional kann in jedem Ausführungsbeispiel der Vorrichtung 100 eine Einheit installiert sein, die dazu ausgebildet ist, den Schlauch 101 am Ende der Bereitstellung zu schrumpfen, beispielsweise zu erhitzen.

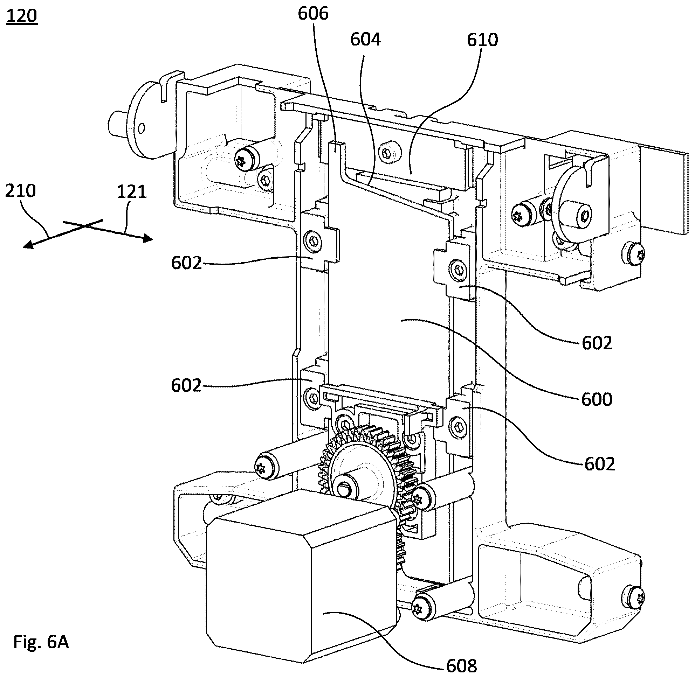

Fig. 6A zeigt eine schematische perspektivische Ansicht einer beispielhaften Schneideinheit 120 der Vorrichtung 100 zur Bereitstellung des Schlauchs 101 als Kennzeichnung. Die Schneideinheit 120 kann (beispielsweise zusätzlich zur Öffnereinheit 122) ein Beispiel für einen Aktor der Vorrichtung 100 sein.

Die Schneideinheit 120 umfasst eine längsbewegliche Klinge 600 (auch: Messer), beispielsweise geführt in mindestens zwei oder vier Führungen 602. Die Führungen 602 können paarweise an in der Querrichtung 121 gegenüberliegenden Längskanten der Klinge 600 angeordnet sein.

Die Klinge 600 ist vorzugsweise senkrecht zur Längsrichtung 210 und senkrecht zur Querrichtung 121 längsbeweglich.

Die beweglichen Klinge 600 umfasst eine Schnittkante 604. Das bedruckte Schlauch 214 wird zwischen der längsbeweglichen Klinge 600 und einer stationären Klinge 610 durch Scherkräfte durchgeschnitten. Eine Schnittkante der stationären Klinge 610 kann parallel zur Querrichtung 121 sein.

Die Schnittkante 604 der längsbeweglichen Klinge 600 kann parallel zur Querrichtung 121 und/oder parallel zur Schnittkante der stationären Klinge 610 sein. Mit anderen Worten, die Schnittkante 604 der längsbeweglichen Klinge 600 kann senkrecht zur Schneidrichtung (d.h. der Bewegungsrichtung der längsbeweglichen Klinge 600) sein.

Alternativ kann, wie beispielsweise schematisch in Fig. 6A gezeigt, die Schnittkante 604 der längsbeweglichen Klinge 600 einen (vorzugsweise spitzen) Winkel mit der Querrichtung 121 und/oder mit der Schnittkante der stationären Klinge 610 einschließen. Mit anderen Worten, die Schnittkante 604 der längsbeweglichen Klinge 600 kann schräg zur Querrichtung 121 angeordnet sein. Der spitze Winkel kann kleiner als 60° oder kleiner als 45° sein. Beispielsweise kann der Winkel kleiner als 30°, vorzugsweise zwischen 5° und 10° sein. In einer Variante ist, alternativ oder zusätzlich zur Schnittkante 604 der längsbeweglichen Klinge 600, die Schnittkante der stationären Klinge 610 schräg zur Querrichtung 121.

Vorzugsweise weist die längsbewegliche Klinge 600 einen Führungszapfen 606 auf, der dazu angeordnet ist, die längsbewegliche Klinge 600 lückenlos und/oder unverkantet an der stationären Klinge 610 vorbeizuführen. Mit anderen Worten, der Führungszapfen 606 ist dazu ausgebildet, dass die längsbewegliche Klinge 600 nicht gegen die stationäre Klinge 610 stößt, wenn die längsbewegliche Klinge 600 über die stationäre Klinge 610 gleitet zum Durchschneiden des Schlauchs 214. Vorzugsweise ragt der Führungszapfen 606 in Bewegungsrichtung der längsbeweglichen Klinge 600 über die Schnittkante 604 hinaus. Mit anderen Worten, der Führungszapfen 606 ist vorauseilend beim Durchschneiden.

Ein Antrieb 608 der längsbeweglichen Klinge 600 ist von der elektrischen Schnittstelle 154 gespeist und/oder von der Steuerung 130 und/oder 230 angesteuert.

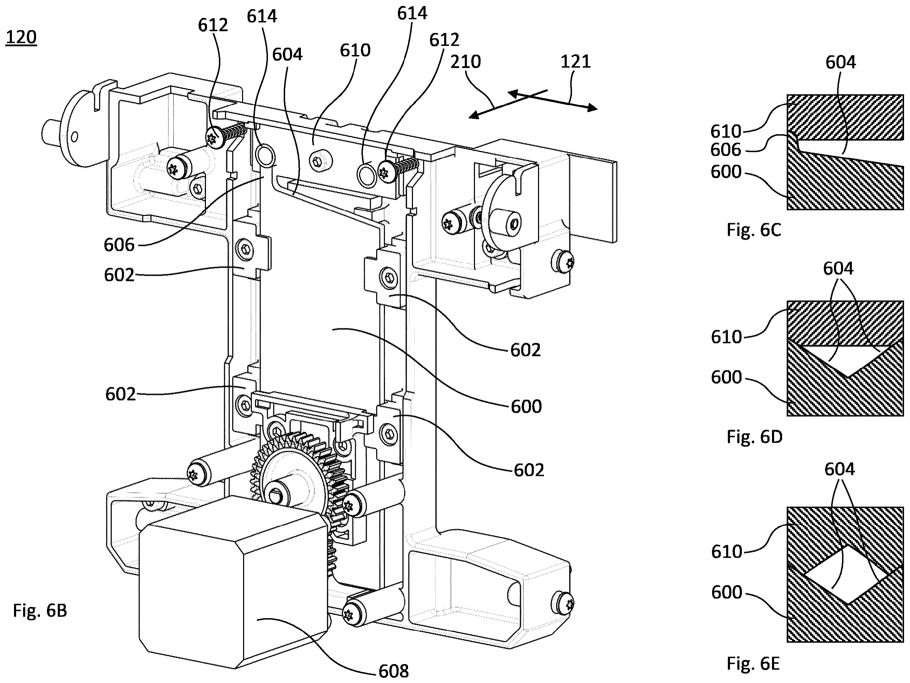

Fig. 6B zeigt Beispiele für Verbindungsmittel, beispielsweise um die Flachhalteeinheit 160 an der Schneideinheit 120 der Vorrichtung 100 zu befestigen. Beispielsweise sind in der Schneideinheit 120 Ausnehmungen vorgesehen, in die Schrauben 612 ragen zur Befestigung der Flachhalteeinheit 160, optional mit Abstandshülsen 614. Indem die Verbindungsmittel 612 und 614 demontiert werden, können die Klingen 600 und 610 leicht gewechselt werden.

Fig. 6C zeigt eine schematische Ansicht einer ersten beispielhaften Kombination von Klingen 600 und 610, die mit dem Beispiel der Schneideinheit 120 kombinierbar sein können. Vorzugsweise umfasst eine einfach-schräge Ausführung (d.h. eine Kombination der Klingen 600 und 610, bei denen eine Schnittkante parallel zur Querrichtung 121 ist und eine schräg ist) den Führungszapfen 604, damit die bewegliche Klinge 600 nicht gegen die stationäre Kling 610 (auch: Gegenhalter) stößt.

Fig. 6D zeigt eine schematische Ansicht einer zweiten beispielhaften Kombination von Klingen 600 und 610, die mit dem Beispiel der Schneideinheit 120 kombinierbar sein können. Die Schnittkante 604 der längsbeweglichen Klinge 600 kann V-förmig sein. Dadurch kann der Schlauch 214 ohne ein Verrutschen in der Querrichtung 121 geschnitten werden (auch: Zentrierungsfunktionalität). Vorzugsweise überlappen Enden der V-förmigen Schnittkante 604 im offenen Zustand (d.h. vor dem Durchschneiden) mit der Schnittkante der stationären Klinge 610. Dadurch kann die Funktionalität des Führungszapfens 604 und die Zentrierungsfunktionalität ohne zusätzliche Bauteile realisiert sein.

Fig. 6E zeigt eine schematische Ansicht einer dritten beispielhaften Kombination von Klingen 600 und 610, die mit dem Beispiel der Schneideinheit 120 kombinierbar sein können. Die Klingenformen können doppelschräg sein. Beispielsweise kann die Schnittkante 604 der längsbeweglichen Klinge 600 und die Schnittkante der stationären Klinge 610 jeweils V-förmig sein. Die Enden der V-förmigen Schnittkanten der Klingen 600 und 610 können im offenen Zustand paarweise überlappen.

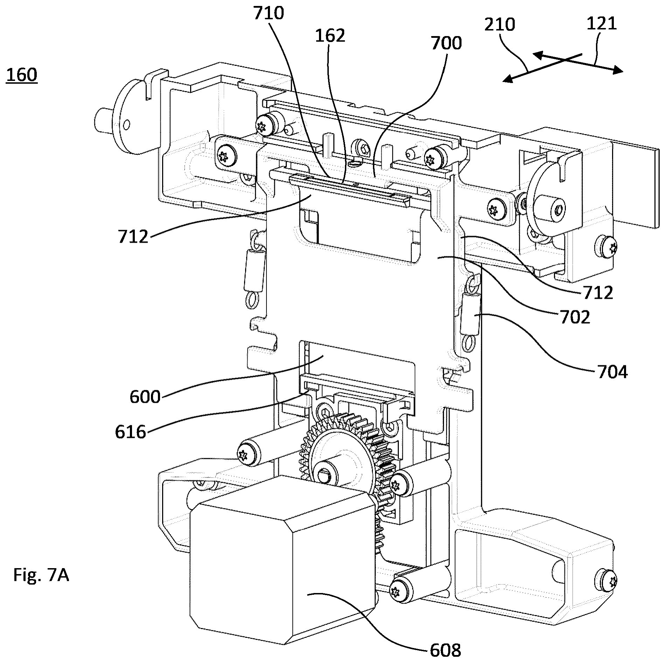

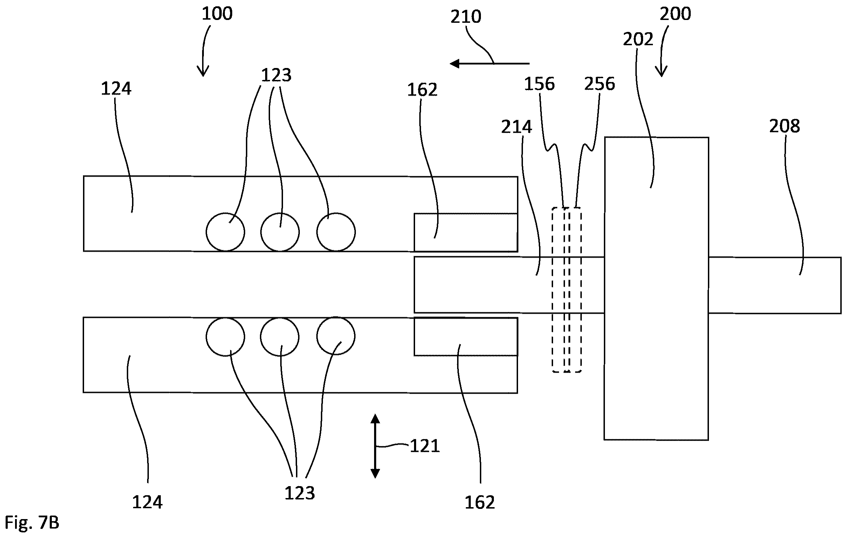

Fig. 7 zeigt eine schematische perspektivische Ansicht einer beispielhaften Flachhalteeinheit 160 (auch: Niederhalteeinheit oder Niederhalter) der Vorrichtung 100. Die Flachhalteeinheit 160 kann (beispielsweise zusätzlich zu dem Aktor 120 und/oder 122) ein Beispiel für einen Aktor der Vorrichtung 100 sein.

Die Flachhalteeinheit 160 ist dazu ausgebildet, den Schlauch 214 wahlweise zu klemmen. Die Flachhalteeinheit 160 ist vorzugsweise nahe an der Öffnereinheit 160 angeordnet, beispielsweise in der Längsrichtung 210 ein oder wenige Durchmesser des Schlauchs 214 entfernt von der Öffnereinheit 160 angeordnet. Das heißt, beim Drücken auf die Längskanten des Schlauches 214 mittels der Öffnerrollen 123 ist die Flachhalteeinheit 160 nicht allzu weit weg, so dass der Schlauch 214 (beispielsweise Eingangsseitig der Öffnereinheit 160) flach gehalten bleibt oder platt gedrückt ist. Das Flachhalten oder Plattdrücken kann durch sich jeweils in der Querrichtung 121 erstreckende Niederhalterkanten 700 und 710, beispielsweise wie schematisch in Fig. 7A gezeigt, oder eine Rolle (statt einer der Niederhalterkanten 700 und 710) oder ein Rollenpaar (statt beider Niederhalterkanten 700 und 710) realisiert sein.

Die Niederhalterkanten können eine längsbewegliche Niederhalterkante 700 und eine stationäre Niederhalterkante 710 umfassen. Vorzugsweise ist die längsbewegliche Niederhalterkante 700 längsbeweglich senkrecht zur Längsrichtung 210 (d.h. der Vorschubrichtung) des Schlauchs 214 und senkrecht zur Querrichtung 121.

Vorzugsweise umfasst ein längsbeweglicher Rahmen 702 die längsbewegliche Niederhalterkante 700. Alternativ oder in Kombination umfasst ein stationärer Rahmen 712 die stationäre Niederhalterkante 710.

Eine federelastische Kopplung 704 (beispielsweise gemäß Fig. 7A, worin die Kopplung 704 ausgehängt ist) zwischen der längsbeweglichen Niederhalterkante 700 und der stationäre Niederhalterkante 710 (beispielsweise zwischen dem längsbeweglichen Rahmen 702 und dem stationären Rahmen 712) kraftbeaufschlagt die längsbeglichen Niederhalterkante 700 in Richtung einer Offenstellung, d.h. zur Trennung der Niederhalterkanten 700 und 710.

Vorzugsweise treibt der Antrieb 608 der Schneideinheit 120 auch die Flachhalteeinheit an. Beispielsweise umfasst die längsbewegliche Klinge 600 einen Anschlag 616, der dazu angeordnet ist, die längsbewegliche Niederhalterkante 700 (beispielsweise den längsbeweglichen Rahmen 702) entgegen der Kraft der federelastische Kopplung 704 in eine Schließstellung zu bewegen, in der die Niederhalterkanten 700 und 710 den Schlauch 214 flach halten. Beispielsweise kann der Antrieb 608 die längsbewegliche Klinge 600 nach dem Durchschneiden weiter aus einer Förderebene des Schlauchs 214 bewegen (d.h. weg vom Schlauch 214 bewegen), wobei der Anschlag 616 den längsbeweglichen Rahmen 702 in die Schließstellung der Flachhalteeinheit 160 bewegt.

Beim Durchschneiden (das bezogen auf die Bereitstellung einer Kennzeichnung 101 dem Flachhalten beispielsweise vorausgeht) können Anschlag 616 und längsbeweglichen Rahmen 702 außer Eingriff sein.

Fig. 7B zeigt eine schematische Draufsicht einer beispielhaften Öffnereinheit 122 der Vorrichtung 100 zur Bereitstellung eines Schlauchs als Kennzeichnung. Alternativ oder ergänzend zu einem Heizelement 162 in der Flachhalteeinheit 160 können in den Schlitten 124 der Öffnereinheit 122 Heizelemente 162 angeordnet sein. Das optionale Heizelement 162 der Flachhalteeinheit 160 wirkt vorzugsweise senkrecht zur Querrichtung auf den Schlauch 214 ein, um diesen zu öffnen, beispielsweise von oben oder von unten. Die optionalen Heizelemente 162 der Öffnereinheit 122 wirken vorzugsweise an in der Querrichtung 121 gegenüberliegenden Seiten des Schlauchs 214 auf den Schlauch 214 ein, um diesen zu öffnen, beispielsweise horizontal seitlich.

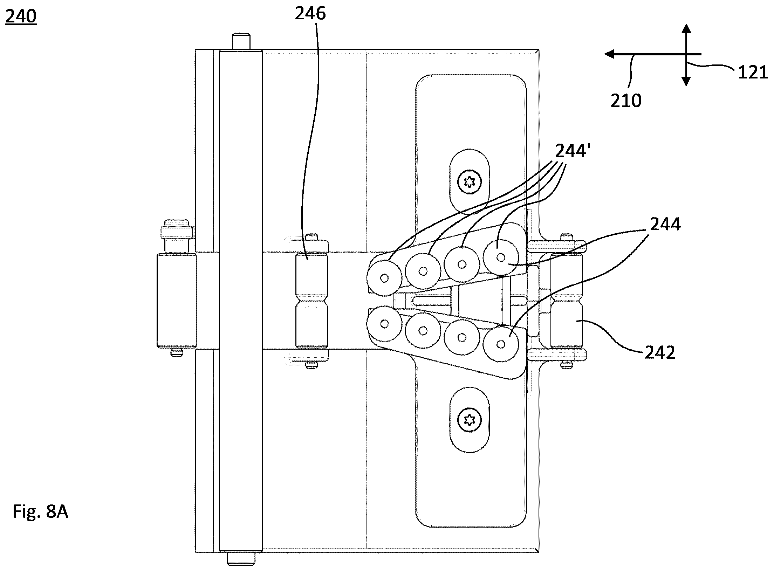

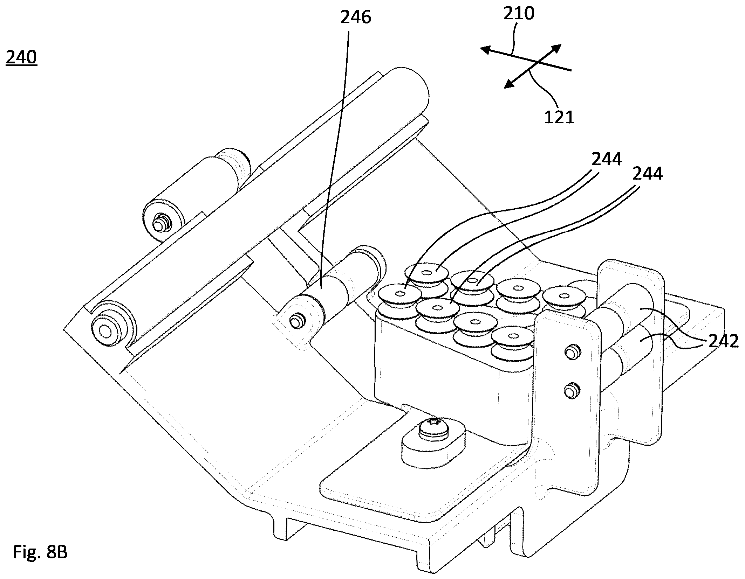

Fig. 8A zeigt eine schematische Draufsicht einer beispielhaften Rollenpaaranordnung 240 des Druckers 200 und/oder der Vorrichtung 100 zur Bereitstellung eines Schlauchs als Kennzeichnung. Fig. 8B zeigt eine schematische perspektivische Ansicht der beispielhaften Rollenpaaranordnung der Fig. 8A.

Optional kann die Rollenpaaranordnung 240 oder zumindest eines der horizontalen Rollenpaar 242 und 246 als Fachhalteeinheit 160 Teil der Vorrichtung 100 sein. Alternativ oder ergänzend kann die Rollenpaaranordnung 240 Teil des Druckers 200 sein, beispielsweise gemäß Fig. 4. Die Rollen jedes oder einzelner Rollenpaare können jeweils eine umlaufende Rille oder Taillierung aufweisen.

Abstände zwischen den Rollen jeweils eines von mehreren Rollenpaare 244 können in der Längsrichtung abnehmen, wie anhand der Rollen 244' schematisch gezeigt (V-Anordnung).

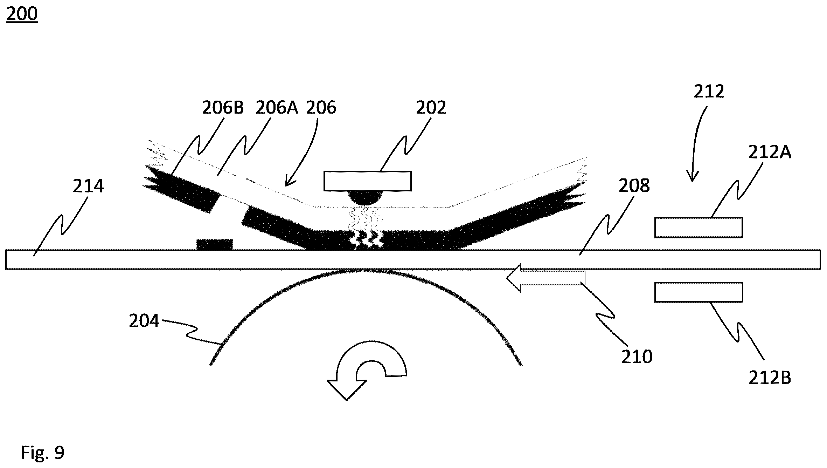

Fig. 9 zeigt ein weiteres Ausführungsbeispiel des Druckers 200, das eigenständig oder als Weiterbildung des im Kontext der Fig. 1 beschriebenen Ausführungsbeispiels des Druckers 200 realisiert sein kann. Merkmale der Ausführungsbeispiele, die mit gleichen Bezugszeichen bezeichnet sind, können übereinstimmen oder austauschbar sein. Das weitere Ausführungsbeispiel des Druckers 200 ist ein Beispiel für einen Thermotransfer-Rollendrucker.

Eine Steuereinheit 230 des Druckers 200 steuert abhängig von den Signalen der Lichtschranke 212 und/oder über die Datenschnittstelle 258 von der Vorrichtung 100 (d.h. über die Datenschnittstelle 158 der Vorrichtung 100) erhaltenen Steuerbefehlen einen Vorschub und/oder einen Rückzug des Druckmediums 208 am Druckkopf 202 beziehungsweise des Druckerzeugnisses 214 an der Materialschnittstelle 256 (und infolgedessen an der Materialschnittstelle 156 der Vorrichtung 100). Hierzu kann die Steuereinheit 230 einen Antrieb (beispielsweise einen Schrittmotor) zur Drehung der Druckwalze 204 steuern.

Die Lichtschranke 212 kann, bezüglich einer Bewegungsrichtung 210 des Druckmediums 208 beim Vorschub, vor dem Druckkopf 202 und/oder der Druckwalze 204 angeordnet sein. Die Lichtschranke 212 kann, wie beispielhaft in der Fig. 6 gezeigt eine Lichtquelle 212A auf der Seite des Druckkopfs 202 und einen Lichtsensor 212B auf der Seite der Druckwalze 204 umfassen. In einer ersten Variante können die Positionen von Lichtquelle 212A und Lichtsensor 212B vertauscht sein. In einer zweiten Variante können Lichtquelle 212A und Lichtsensor 212B auf derselben Seite angeordnet sein zur Erfassung des Druckmediums 208 in Reflektion.

Der Druckkopf 202 umfasst eine Vielzahl von Heizelementen. Werden die Heizelemente beheizt (beispielsweise bestromt) und die Druckwalze 204 übt einen vorbestimmten (beispielsweise ausreichend großen) Druck auf das Druckmedium 208 aus, werden die Farbpigmente vom Druckmaterial 206 (beispielsweise einem Farbband) auf das zu bedruckende Material übertragen. Die Steuereinheit 230 kann den Schrittmotor zur Drehung der Druckwalze 204 steuern und die Bestromung der Heizelemente des Druckkopfs 202 steuern.

Das Druckmaterial 206 kann mehrere Schichten umfassen. Beispielsweise kann das Druckmaterial 206 ein vom Druckmedium 208 abgewandtes Trägermaterial 206A (beispielsweise eine Trägerfolie) und eine dem Druckmedium 208 zugewandte Farbschicht 206B (beispielsweise ein Farbwachs) umfassen.

Der Drucker 200 ist vorzugsweise ein Tischgerät, an das die Vorrichtung 100 als ein wechselbares Modul, beispielsweise anwendungsspezifisch oder für die Dauer eines einheitlichen Applikationsvorgangs, befestigt werden kann.

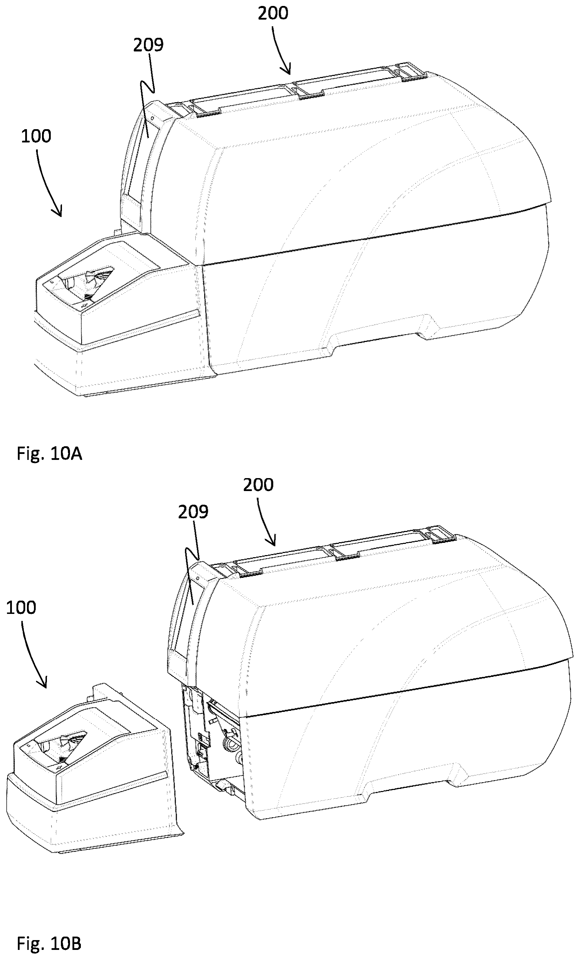

Fig. 10A zeigt eine schematische perspektivische Ansicht eines beispielhaften Drucksystems, das ein Ausführungsbeispiel des Druckers 200 und ein Ausführungsbeispiel der Vorrichtung 100 zur Bereitstellung eines Schlauchs als Kennzeichnung 101 umfasst, in einer montierten Stellung. Fig. 10B zeigt eine schematische perspektivische Ansicht des beispielhaften Drucksystems der Fig. 10A in einer demontierten Stellung.

Jedes Ausführungsbeispiel der Vorrichtung 100 kann durch folgende Bedienschritte B1 bis B17 verwendet werden und/oder folgende Schritte ausführen.

B1: Der Bediener erzeugt die Druckdaten auf einem PC 300 oder einem mobilen Gerät 300, beispielsweise eine Tablet-Computer oder Mobiltelefon. Hierbei wird schon das Bedruckungsmaterial ausgewählt und dementsprechend die Schlauchgröße und/oder Schlauch-Typ berücksichtigt.

B2: Der Bediener montiert die Vorrichtung 100 am Drucker 200.

B3: Der Bediener legt das Bedruckungsmaterial in den Drucker 200 ein, führt das Bedruckungsmaterial 208 zwischen Druckkopf 202 und Farbband 206, justiert die Materialführung und optional andere Einstellmöglichkeiten, und schließt den Druckkopf 202.

B4: Der Bediener schaltet den Drucker 200 ein.

B5: Der Drucker 200 (beispielsweise die Steuerung 230) erkennt die Vorrichtung 100 (beispielsweise als Applikator) über die Datenschnittstellen 158 bzw. 258, und initialisiert den Drucker 200 und die Vorrichtung 100.

B6: Der Bediener schickt einen Druckauftrag über die Druckfunktion eines Computers 300 (beispielsweise eines PCs) oder eines mobilen Gerätes 300 (beispielsweise ein über ein Drahtlosnetz oder ein Mobilfunknetz in Datenverbindung mit dem Drucker 200 stehendes Gerät 300) zum Drucker 200.

B7: Der Drucker 200 erkennt über die Lichtschranke 212 den Anfang des Bedruckungsmaterials 208 oder führt alternativ einen Referenzschnitt (beispielsweise mittels der Schneideinheit 120 der Vorrichtung 100 oder einer weiteren Scheideeinheit des Druckers 200) durch. Der Referenzschnitt kann ein Schlauchstück in einer manuell entnehmbaren Länge erzeugen.

B8: Der Drucker 200 bedruckt einen ersten Schlauchabschnitt oder Schlauchstück 214.

B9: Der Drucker 200 transportiert das Schlauchstück 214 (durch die materialschnittstellen 156 bzw. 256) bis zur Schnittstelle des Schlauchs bzw. bis zur Schneideposition der Schneideinheit 120.

B10: Die Vorrichtung 100 (beispielsweise gesteuert von der Steuerung 130) schneidet den Schlauch 214 ab.

B11: Die Vorrichtung 100 (beispielsweise gesteuert von der Steuerung 130) übernimmt das abgeschnittene bedruckte Schlauchstück mittel der Öffnerrollen 123.

B12: Der Drucker 200 zieht das Bedruckungsmaterial 208 währenddessen (beispielsweise während der Bereitstellung durch die Vorrichtung 100) zurück zum Druckstart des nächsten Schlauchstückes.

B13: Die Vorrichtung 100 fährt, beispielsweise abhängig vom Material 208, ein bestimmtes Bewegungsprofil ab. Das Bereitstellen (beispielsweise das Bewegungsprofil) kann einen seitlichen Hub, ein Flachhalten des Schlauchs mittels der Flachhalteeinheit 160, ein Drücken der Öffnerrollen durch Bewegen der Schlitten 124 in der Querrichtung 121, ein Walken des Schlauchs durch Drehen der Öffnerrollen 123 beispielsweise mit Vor- und Zurückbewegung des Schlauchs in der Längsrichtung 210, ein Voröffnen des Schlauches im geklemmten oder flachgehaltenen Zustand, ein Voröffnen mittels Saugnapf und/oder ein Voröffnen mittels des Heizelements 162 umfassen.

B14: Die Vorrichtung 100 stellt den geöffneten Schlauch 101 bereit, um den Schlauch 101 auf das Objekt 102 (beispielsweise einen Träger, vorzugsweise einen Leiter, z.B. ein Kabel) anzuordnen (beispielsweise aufzufädeln).

B15. Der Benutzer quittiert (beispielsweise mittels des Taster als Sensor 106), dass das Objekt 102 positioniert (beispielsweise in die Vorrichtung 100 eingelegt) ist, und/oder die Vorrichtung 100 erfasst mittels des Sensors 106 die Präsenz des Objekts 102.

B16: Die Vorrichtung 100 gibt den anordenbaren Schlauch 101 frei oder transportiert das Schlauch 101 (d.h. Schlauchstück) zum eingelegten Leiter 102 hin, beispielsweis zum Auffädeln des Leiters 102 im Schlauch 101.

B17: Der nächste Druckauftrag kann gestartet werden.

Bei einem oder mehreren Druckaufträgen (für die Bereitstellung eines Schlauchs 101 oder mit mehreren Schläuchen 101) erfolgt vorzugsweise ein verschachtelter Ablauf zwischen Vorrichtung 100 und Drucker 200. Bei einem Druckauftrag zu mehreren Schläuchen 101 erfolgt vorzugsweise ein verschachtelter Ablauf zwischen Vorrichtung 100 und Drucker 200, sodass der nächste Schlauch 214, nach dem Abschneiden des vorherigen Schlauchs 101 und dem Rückzug des Druckmaterial 208 sofort bedruckt und der Vorrichtung 100 zugeführt werden kann.

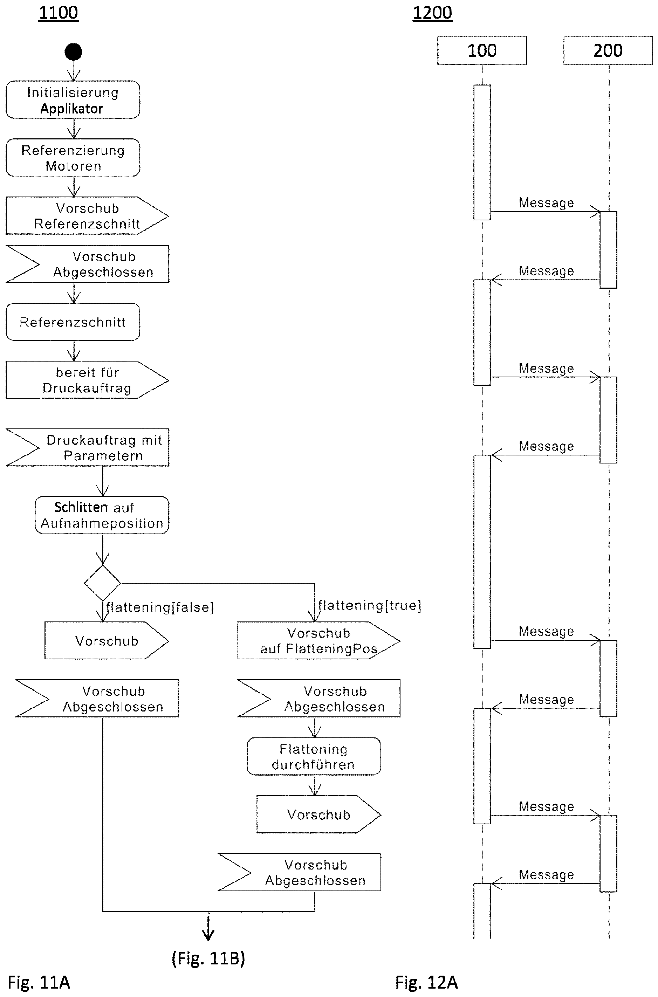

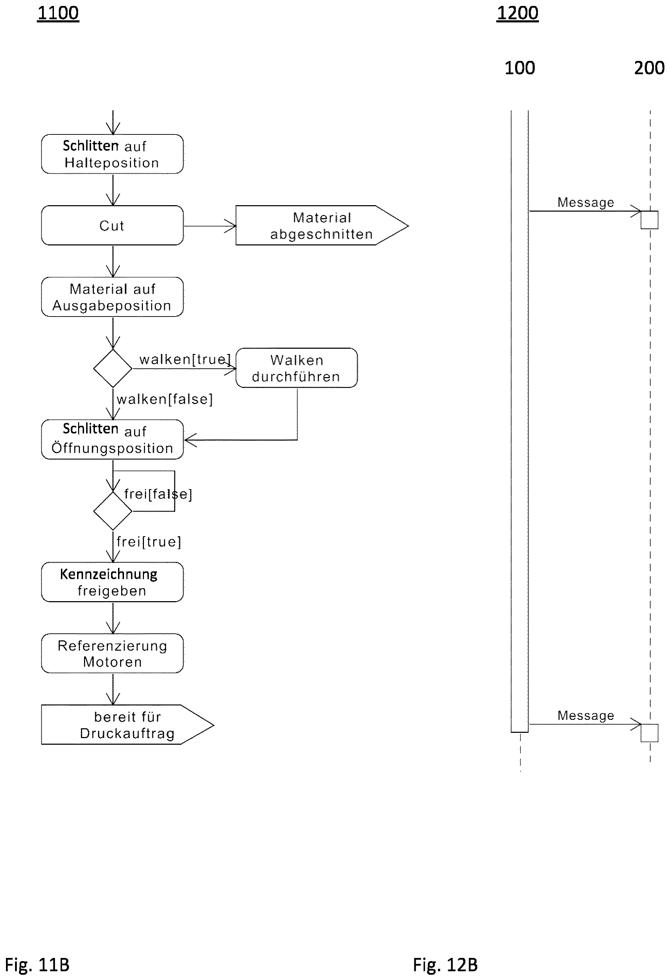

Die Fig. 11A und 11B zeigen einen ersten bzw. zweiten Abschnitt eines Flussdiagramms eines Ausführungsbeispiels eines Verfahrens 1100 zum Bereitstellen eines Schlauchs als Kennzeichnung 101. Das Verfahren 1100 kann als Ablaufsteuerung in der Steuerung 130 der Vorrichtung 100 und/oder der Steuerung 230 des Druckers 200 implementiert sein. Fig. 12A und 12B zeigen als vertikale Balken eine entsprechende Aktion und durch horizontale Pfeile eine entsprechende Kommunikation. Dabei kann die "Message" einen Steuerbefehl umfassen. Das "Flattening" kann sich auf das Flachhalten beziehen.

Ein von der Vorrichtung 100, vorzugsweise von der Steuerung 130, ausgeführtes Verfahren 1100 kann wenigstens einen der folgenden Schritte S1 bis S24 umfassen.

S1: Die Vorrichtung 100, die auch als Sleeve-Opener bezeichnet werden kann, wird initialisiert, beispielsweise eingeschaltet und/oder auf einem Drucker 200 montiert.

S2: Mindestens einer oder jeder der Aktuatoren (beispielsweise Antriebe und/oder Motoren) der Vorrichtung 100 wird referenziert, beispielsweise führt eine Referenzfahrt aus.

S3: Ein Steuerbefehl zur Ausführung eines Vorschubs des Druckmediums 208 durch den Drucker 200 (für einen Referenzschnitt) wird an den Drucker 200 gesendet, vorzugsweise über die Datenschnittstelle 158.

S4: Ein Signal (beispielsweise als Steuerbefehl) zum Abschluss des Vorschubs wird vom Drucker 200 empfangen, vorzugsweise über die Datenschnittstelle 158.

S5: Der Referenzschnitt wird durchgeführt, vorzugsweise mittels der Schneideinheit 120.

S6: Ein Signal (beispielsweise als Steuerbefehl) zur Bereitschaft für einen Druckauftrag und/oder zur Bereitschaft für ein Bereitstellen einer Kennzeichnung 101 wird an den Drucker 200 gesendet, vorzugsweise über die Datenschnittstelle 158.

S7: Ein Steuerbefehl zur Ausführung eines Druckauftrags und/oder zum Bereitstellen der Kennzeichnung 101 wird vom Drucker 200 empfangen, vorzugsweise über die Datenschnittstelle 158. Der empfangene Steuerbefehl kann mindestens einen Parameter des Druckauftrags und/oder des Bereitstellens umfassen.

S8: Mindestens einer oder jeder der Aktuatoren (beispielsweise Antriebe und/oder Motoren) der Vorrichtung 100, vorzugsweise die längsbewegliche Klinge 600 und/oder die Flachhalteeinheit 160 und/oder die Schlitten 124 der Öffnereinheit 122, wird in eine Offenstellung zur Aufnahme eines bedruckten Schlauchs 214 bewegt.

Falls ein Flachhalten (beispielsweise als Parameter) nicht gesetzt ist, werden die Schritte S9 und S10 ausgeführt.

S9: Ein Steuerbefehl zur Ausführung eines Vorschubs des Druckmediums 208 durch den Drucker 200 (für ein Schneiden des Schlauchs 214) wird an den Drucker 200 gesendet, vorzugsweise über die Datenschnittstelle 158.

S10: Ein Signal (beispielsweise als Steuerbefehl) zum Abschluss des Vorschubs (für das Schneiden) wird vom Drucker 200 empfangen, vorzugsweise über die Datenschnittstelle 158.

Falls ein Flachhalten (beispielsweise als Parameter) gesetzt ist, werden die Schritte S11 und S15 ausgeführt.

S11: Ein Steuerbefehl zur Ausführung eines Vorschubs des Druckmediums 208 durch den Drucker 200 (für ein Flachhalten des Schlauchs 214) wird an den Drucker 200 gesendet, vorzugsweise über die Datenschnittstelle 158.

S12: Ein Signal (beispielsweise als Steuerbefehl) zum Abschluss des Vorschubs (für das Flachhalten) wird vom Drucker 200 empfangen, vorzugsweise über die Datenschnittstelle 158.

S13: Das Flachhalten wird durchgeführt, vorzugsweise mittels der Flachhalteeinheit 160.

S14: Ein Steuerbefehl zur Ausführung eines Vorschubs (beispielsweise einen Differenzvorschub zwischen Flachhalteposition und Schneidposition) des Druckmediums 208 durch den Drucker 200 (für ein Schneiden des Schlauchs 214) wird an den Drucker 200 gesendet, vorzugsweise über die Datenschnittstelle 158.

S15: Ein Signal (beispielsweise als Steuerbefehl) zum Abschluss des Vorschubs (für das Schneiden) wird vom Drucker 200 empfangen, vorzugsweise über die Datenschnittstelle 158.

S16: Mindestens einer oder jeder der Aktuatoren (beispielsweise Antriebe und/oder Motoren) der Vorrichtung 100, vorzugsweise die längsbewegliche Klinge 600 und/oder die Flachhalteeinheit 160 und/oder die Schlitten 124 der Öffnereinheit 122, wird in eine Halteposition zum Halten des bedruckten Schlauchs 214, vorzugsweise mittels der Niederhalterkanten 700 und 710, bewegt.

S17: Der Schnitt des bedruckten Schlauchs 214 wird durchgeführt, vorzugsweise mittels der Schneideinheit 120.

S18: Ein Signal (beispielsweise als Steuerbefehl) zum Abschluss des Schnitts wird an den Drucker 200 gesendet, vorzugsweise über die Datenschnittstelle 158.

S19: Der geschnittene bedruckte Schlauch 214 wird auf eine Ausgabeposition gefördert, vorzugsweise mittels der Öffnereinheit 122.

Falls ein Walken (beispielsweise als Parameter) gesetzt ist, wird der Schritt S20 ausgeführt.

S20: Ein Walken des geschnittenen bedruckten Schlauchs 214 wird durchgeführt, beispielsweise mittels der Öffnereinheit 122.

S21: Mindestens einer oder jeder der Aktuatoren (beispielsweise Antriebe und/oder Motoren) der Vorrichtung 100, vorzugsweise die längsbewegliche Klinge 600 und/oder die Flachhalteeinheit 160 und/oder die Schlitten 124 der Öffnereinheit 122, wird in eine Offenstellung (beispielsweise durch räumliches Trennen der Niederhalterkanten 700 und 710) bewegt.

Falls ein Freigeben (beispielsweise als Parameter) gesetzt ist, wird der Schritt S22 ausgeführt.

S22: Mindestens einer oder jeder der Aktuatoren (beispielsweise Antriebe und/oder Motoren) der Vorrichtung 100, vorzugsweise die Schlitten 124 und/oder die Öffnereinheit 122, wird in eine Freigabestellung (beispielsweise durch räumliches Trennen der Schlitten 124) bewegt.

S23: Mindestens einer oder jeder der Aktuatoren (beispielsweise Antriebe und/oder Motoren) der Vorrichtung 100 wird referenziert, beispielsweise führt eine Referenzfahrt aus.

S24: Ein Signal (beispielsweise als Steuerbefehl) zur Bereitschaft für einen Druckauftrag und/oder zur Bereitschaft für ein Bereitstellen einer Kennzeichnung 101 wird an den Drucker 200 gesendet, vorzugsweise über die Datenschnittstelle 158.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Bedruckung des Schlauchs oder ein bestimmtes Druckmaterial an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

**Bezugszeichenliste**

| | |
|---|---|
| Vorrichtung zur Bereitstellung einer Kennzeichnung, beispielsweise Applikator oder Drucksystem | 100 |
| Geöffneter und bedruckter Schlauch als Kennzeichnung | 101 |
| Prolates Objekt, vorzugsweise Leiter, beispielsweise Kupferleiter oder Lichtleiter | 102 |
| Drucksignalschnittstelle eines Steuersignals zur Ausgabe des bedruckten Schlauchs, beispielsweise Sensor zur Erfassung des bedruckten Schlauchs | 104 |
| Sensor eines Steuersignals zur Bereitstellung der Kennzeichnung, beispielsweise Erfassung des Objekts oder Bereitstellungswunschs | 106 |
| Schneideinheit der Vorrichtung | 120 |
| Querrichtung | 121 |
| Öffnereinheit der Vorrichtung | 122 |
| Öffnerrolle, vorzugsweise taillierte Rolle, der Öffnereinheit | 123 |
| Drehachse der Öffnerrolle | 123A |
| Schlitten der Öffnereinheit | 124 |
| Lineargetriebe der Schlitten | 126 |
| Querführung der Schlitten | 127 |
| Antrieb der Schlitten | 128 |
| Steuereinheit oder Regeleinheit der Vorrichtung | 130 |
| Mechanische Schnittstelle der Vorrichtung | 152 |
| Elektrische Schnittstelle der Vorrichtung | 154 |
| Materialschnittstelle der Vorrichtung | 156 |
| Drucksignalschnittstelle eines Steuersignals zur Ausgabe des bedruckten Schlauchs, beispielsweise Datenschnittstelle der Vorrichtung | 158 |
| Flachhalteeinheit | 160 |
| Heizelement, vorzugsweise in Flachhalteeinheit oder Öffnereinheit | 162 |
| Unterdrucköffnereinheit | 170 |
| Objektzentriereinheit | 180 |
| Erste Prismenhälfte der Objektzentrierung | 182 |
| Zweite Prismenhälfte der Objektzentrierung | 184 |
| Drucker, beispielsweise Thermotransferdrucker | 200 |
| Druckkopf des Druckers | 202 |
| Druckwalze des Druckers | 204 |
| Druckmaterial, beispielsweise Farbband | 206 |
| Trägermaterial des Druckmaterials, beispielsweise Trägerfolie | 206A |
| Farbschicht des Druckmaterials, beispielsweise Farbwachs | 206B |
| Druckmedium des Druckers (auch: Bedruckungsmaterial) | 208 |
| Anzeige, vorzugsweise Benutzerschnittstelle, des Druckers | 209 |
| Vorschubrichtung oder Längsrichtung des Druckmediums | 210 |
| Lichtschranke des Druckers | 212 |
| Lichtquelle der Lichtschranke | 212A |
| Lichtsensor der Lichtschranke | 212B |
| Bedruckter Schlauch als Druckerzeugnis des Druckers | 214 |
| Abroller des Druckmediums | 216 |
| Abroller des Druckmaterials | 218 |
| Aufwickler des Druckmaterials | 220 |
| Datenschnittstelle des Druckers | 222 |
| Steuereinheit des Druckers | 230 |
| Rollenanordnung | 240 |
| Erstes Rollenpaar, vorzugsweise horizontales Rollenpaar | 242 |
| Zweites Rollenpaar, vorzugsweise vertikales Rollenpaar | 244 |
| Drittes Rollenpaar, vorzugsweise horizontales Rollenpaar | 246 |
| Mechanische Schnittstelle des Druckers | 252 |
| Elektrische Schnittstelle des Druckers | 254 |
| Materialschnittstelle des Druckers | 256 |
| Datenschnittstelle des Druckers | 258 |
| Computer oder Computernetzwerk | 300 |
| Bewegliche Klinge | 600 |
| Führung der beweglichen Klinge | 602 |
| Schnittkante der beweglichen Klinge | 604 |
| Führungszapfen der beweglichen Klinge | 606 |
| Antrieb Schneideinheit und/oder der Flachhalteeinheit, | |
| beispielsweise der beweglichen Klinge | 608 |
| Stationäre Klinge | 610 |
| Schraube zur Befestigung der Flachhalteeinheit | 612 |
| Abstandshülse zur Befestigung der Flachhalteeinheit | 614 |
| Anschlag für Flachhalteeinheit | 616 |
| Längsbewegliche Niederhalterkante | 700 |
| Längsbeweglicher Rahmen der Niederhalterkante | 702 |
| Federelastische Kopplung zwischen Niederhalterkanten | 704 |
| Stationäre Niederhalterkante | 710 |
| Stationärer Rahmen der Niederhalterkante | 712 |

## Patentansprüche

1. Vorrichtung (100) zur Bereitstellung eines um ein prolates Objekt (102), vorzugsweise um einen Leiter, umlaufend geschlossen angeordneten oder anordenbaren Schlauchs als Kennzeichnung (101) des Objekts (102), umfassend:
einen Drucker (200), der dazu ausgebildet ist, einen bedruckten Schlauch (214) in Längsrichtung (210) auszugeben oder eine Materialschnittstelle (156), die dazu ausgebildet ist, einen von einem Drucker (200) in Längsrichtung (210) ausgegebenen bedruckten Schlauch (214) aufzunehmen;
eine Schneideinheit (120), die dazu ausgebildet ist, den bedruckten Schlauch (214) an einer Schnittstelle des Schlauchs (214) in einer Querrichtung (121) quer, senkrecht, zur Längsrichtung (210) des Schlauchs (214) zu durchschneiden, wobei zumindest an der Schnittstelle eine obere Schlauchhälfte und eine untere Schlauchhälfte des Schlauchs (214), endseitig und/oder innenseitig, aneinander liegen oder miteinander verbunden sind;
eine Öffnereinheit (122), die zum Öffnen der oberen und unteren Schlauchhälften ausgebildet ist, die mindestens zwei um jeweils eine Drehachse (123A)
drehbare Öffnerrollen (123) umfasst, wobei die jeweilige Drehachse (123A) senkrecht oder im Wesentlichen senkrecht zur Längsrichtung (210) und zur Querrichtung (121) ist, und wobei die mindestens zwei Öffnerrollen (123) dazu ausgebildet sind, am geschnittenen bedruckten Schlauch an in der Querrichtung (121) gegenüberliegenden Seiten anzuliegen oder jeweils einen am geschnittenen bedruckten Schlauch an in der Querrichtung (121) gegenüberliegenden Seiten anliegenden Riemen antreiben; und
zwei in der Querrichtung (121) längsbewegliche Schlitten (124), auf denen jeweils mindestens eine der mindestens zwei Öffnerrollen (123) um die jeweilige Drehachse (123A) drehbar gelagert ist, und wobei ein Abstand der zwei Öffnerrollen des jeweiligen Rollenpaars und/oder eine Andruckkraft der Öffnerrollen auf den geschnittenen bedruckten Schlauch (214) von einer erfassten oder gemessenen Breite des Schlauchs (214) abhängt.

2. Vorrichtung (100) nach Anspruch 1, wobei die Öffnerrollen (123) paarweise an senkrecht zur Längsrichtung (210) gegenüberliegenden Stellen am geschnittenen bedruckten Schlauch anliegen.

3. Vorrichtung (100) nach Anspruch 1 oder 2, ferner umfassend:
eine Objektzentriereinheit (180), die dazu ausgebildet ist, das prolate Objekt (102), vorzugsweise den Leiter, fluchtend oder koaxial zum geschnittenen bedruckten Schlauch (101) anzuordnen.

4. Vorrichtung (100) nach einem der Ansprüche 1 bis 3, wobei die Öffnerrollen (123) dazu ausgebildet sind, zur umlaufend geschlossenen Anordnung um das prolate Objekt (102) den geschnittenen bedruckten Schlauch entlang der Längsrichtung (210) über das prolate Objekt (102) zu schieben.

5. Vorrichtung (100) nach einem der Ansprüche 1 bis 4, ferner umfassend:
eine Drucksignalschnittstelle (104; 158), die dazu ausgebildet ist, ein Steuersignal zur Ausgabe des bedruckten Schlauchs (214) zu erfassen; und/oder
mindestens einen Sensor (106), der dazu ausgebildet ist, ein Steuersignal zur Bereitstellung der Kennzeichnung (101) zu erfassen.

6. Vorrichtung (100) nach einem der Ansprüche 1 bis 5, ferner umfassend:
einen Rollenantrieb, der dazu ausgebildet ist, die Öffnerrollen (123) um die jeweilige Drehachse synchron zu drehen, wobei die am geschnittenen bedruckten Schlauch an in der Querrichtung (121) gegenüberliegenden Seiten anliegenden Öffnerrollen (123) gegenläufig drehen.

7. Vorrichtung (100) nach den Ansprüchen 5 und 6, wobei der Rollenantrieb dazu ausgebildet ist, abhängig von dem Steuersignal zur Ausgabe des bedruckten Schlauchs (214) und/oder dem Steuersignal zur Bereitstellung der Kennzeichnung (101) die Kennzeichnung (101) am Objekt (102) umlaufend geschlossen anzuordnen oder zur umlaufend geschlossen Anordnung bereitzustellen.

8. Vorrichtung (100) nach einem der Ansprüche 1 bis 7, ferner einen zwischen der Flachhalteeinheit (160) und der Öffnereinheit (122) oder zwischen Rollenpaaren (123) der Öffnereinheit (122) angeordneten Breitensensor umfassend, der dazu ausgebildet ist, die Breite des Schlauchs (214) vor dem Öffnen und/oder beim Öffnen zu messen.

9. Vorrichtung (100) nach einem der Ansprüche 1 bis 8, ferner umfassend:
eine Flachhalteeinheit (160), die dazu ausgebildet ist, ein Ausbauchen des Schlauchs (214) senkrecht zur Längsrichtung (210) und/oder senkrecht zur Querrichtung (121) zu verhindern.

10. Vorrichtung (100) nach Anspruch 9, wobei die Flachhalteeinheit (160) und die Schneideinheit (120) von einem gemeinsamen Antrieb (608) angetrieben sind.

11. Vorrichtung (100) nach Anspruch 9 oder 10,
wobei die Vorrichtung (100) eine zusätzliche Einheit zwischen der Flachhalteeinheit (160) und der Öffnereinheit (122) umfasst,
wobei die Flachhalteeinheit (160) ein Heizelement (162) umfasst oder die zusätzliche Einheit ein Heizelement (162) umfasst, das dazu ausgebildet ist, den Schlauch (214) einseitig, vorzugsweise die obere Schlauchhälfte oder die untere Schlauchhälfte, zur lokalen Verformung des Schlauchs (214), vorzugsweise zur lokalen Kontraktion des Schlauchs (214), zu erwärmen.

12. Vorrichtung (100) nach einem der Ansprüche 1 bis 11,
wobei die Vorrichtung (100) eine zusätzliche Einheit zwischen der Flachhalteeinheit (160) und der Öffnereinheit (122) umfasst,
wobei die Öffnereinheit (122) zwei Heizelemente (162) umfasst oder die zusätzliche Einheit zwei Heizelemente (162) umfasst, die auf den Schlauch (214) drücken und/oder Warme leiten an in der Querrichtung (121) gegenüberliegenden Seiten des Schlauchs (214).

13. Vorrichtung (100) nach einem der Ansprüche 1 bis 12, ferner umfassend:
eine Unterdrucköffnereinheit (170), die mindestens einen Saugnapf, vorzugsweise mindestens zwei Saugnäpfe, umfasst, der oder die jeweils auf der oberen Schlauchhälfte und/oder der unteren Schlauchhälfte des Schlauchs (214) in Anlage bringbar sind und mittels eines Unterdrucks im jeweiligen Saugnapf die obere Schlauchhälfte und die unteren Schlauchhälfte zumindest teilweise voneinander zu lösen vermag zum Öffnen des Schlauchs.

14. System (100, 200) zur Bereitstellung eines um ein prolates Objekt (102), vorzugsweise um einen Leiter, umlaufend geschlossen angeordneten oder anordenbaren Schlauchs als Kennzeichnung (101) des Objekts (102), umfassend:
einen Drucker (200), vorzugsweise einen Thermotransferdrucker, der dazu ausgebildet ist, ein einen bedruckten Schlauch als Druckerzeugnis (214) auszugeben; und
eine Vorrichtung (100) gemäß einem der Ansprüche 1 bis 13, wobei die Materialschnittstelle (156) relativ zum Drucker (200), dazu angeordnet ist, den vom Drucker (200) ausgegebenen bedruckten Schlauch als Druckerzeugnis (214) aufzunehmen.

15. Verfahren zur Bereitstellung eines um ein prolates Objekt (102), vorzugsweise um einen Leiter, umlaufend geschlossen angeordneten oder anordenbaren Schlauchs als Kennzeichnung (101) des Objekts (102), umfassend:
Bedrucken eines Schlauchs (214) in Längsrichtung (210) oder Aufnehmen eines an einer Materialschnittstelle (156) von einem Drucker (200) in Längsrichtung (210) ausgegebenen bedruckten Schlauchs (214);
Durchschneiden des bedruckten Schlauchs (214) an einer Schnittstelle des Schlauchs (214) in einer Querrichtung (121) quer, vorzugsweise senkrecht, zur Längsrichtung (210) des Schlauchs (214) mittels einer Schneideinheit (120), wobei zumindest an der Schnittstelle eine obere Schlauchhälfte und eine untere Schlauchhälfte des Schlauchs (214), endseitig und/oder innenseitig, aneinander liegen oder miteinander verbunden sind; und
Öffnen der oberen und unteren Schlauchhälften mittels einer Öffnereinheit (122), wobei mindestens zwei um jeweils eine Drehachse (123A) drehbare Öffnerrollen (123) den Schlauch walken, wobei die jeweilige Drehachse (123A) senkrecht oder im Wesentlichen senkrecht zur Längsrichtung (210) und zur Querrichtung (121) ist, und wobei die mindestens zwei Öffnerrollen (123) am geschnittenen bedruckten Schlauch an in der Querrichtung (121) gegenüberliegenden Seiten anliegen oder jeweils einen am geschnittenen bedruckten Schlauch an in der Querrichtung (121) gegenüberliegenden Seiten anliegenden Riemen antreiben, und wobei auf jeweils zwei in der Querrichtung (121) längsbeweglichen Schlitten (124) mindestens eine der mindestens zwei Öffnerrollen (123) um die jeweilige Drehachse (123A) drehbar gelagert ist, und wobei ein Abstand der zwei Öffnerrollen des jeweiligen Rollenpaars und/oder eine Andruckkraft der Öffnerrollen auf den geschnittenen bedruckten Schlauch (214) von einer erfassten oder gemessenen Breite des Schlauchs (214) abhängt.
